# EUROPÄISCHE PATENTSCHRIFT

(11) **EP 2 160 874 B1**
(45) Veröffentlichungstag und Bekanntmachung des Hinweises auf die Patenterteilung: **26.10.2011**
(21) Anmeldenummer: 08760631.5
(22) Anmeldetag: 06.06.2008
(51) Int. Cl.: H04L 12/56

(54) **VERFAHREN ZUM BETREIBEN EINES DRAHTLOSEN, VERMASCHTEN DATENNETZES MIT EINER MEHRZAHL AN NETZKNOTEN**
METHOD FOR OPERATING A WIRELESS MESH DATA NETWORK WITH MULTIPLE NODES
PROCÉDÉ D'EXPLOITATION D'UN RÉSEAU MAILLÉ SANS FIL COMPORTANT PLUSIEURS NOEUDS DE RÉSEAU

(30) Priorität: 25.06.2007 DE 102007029120
(43) Veröffentlichungstag der Anmeldung: 10.03.2010
(73) Patentinhaber: Siemens Aktiengesellschaft, 80333 München (DE)
(72) Erfinder: BAHR, Michael, 81827 München (DE)
(86) Internationale Anmeldenummer: PCT/EP2008/057057
(87) Internationale Veröffentlichungsnummer: WO 2009/000630

(56) Entgegenhaltungen:
- US-A1- 2005 041 627
- GARCIA-LUNA-ACEVES J J ET AL: "On-Demand Loop-Free Routing With Link Vectors" IEEE JOURNAL ON SELECTED AREAS IN COMMUNICATIONS, IEEE SERVICE CENTER, PISCATAWAY, US, Bd. 23, Nr. 3, 1. März 2005 (2005-03-01), Seiten 533-546, XP011127690 ISSN: 0733-8716
- PANAGIOTIS PAPADIMITRATOS ET AL: "How to Specify and How to Prove Correctness of Secure Routing Protocols for MANET" BROADBAND COMMUNICATIONS, NETWORKS AND SYSTEMS, 2006. BROADNETS 2006. 3RD INTERNATIONAL CONFERENCE ON, IEEE, PI, 1. Oktober 2006 (2006-10-01), Seiten 1-10, XP031155895 ISBN: 978-1-4244-0424-7

## Beschreibung

Die Erfindung betrifft ein Verfahren zum Betreiben eines drahtlosen, vermaschten Datennetzes mit einer Mehrzahl an Netzknoten, bei dem Datenrahmen von einem Quellknoten über einen oder mehrere Zwischenknoten zu einem Zielknoten übertragen werden, wobei der Quellknoten, der eine oder die mehreren Zwischenknoten und der Zielknoten Netzknoten des Datennetzes darstellen.

Die Übertragung von Datenrahmen zwischen dem Quellknoten und dem Zielknoten kann bei vermaschten Datennetzen prinzipiell über unterschiedliche Routen erfolgen. Unter einer Route wird eine Anzahl an Netzknoten verstanden, welche benachbart zueinander angeordnet sind und an ihren Enden eine Datenverbindung zu dem Quellknoten und dem Zielknoten aufweisen. Um die Übertragung der Datenrahmen von dem Quellknoten zu dem Zielknoten nicht dem Zufall zu überlassen, wird von dem Quellknoten eine sog. Weg-Anfragenachricht (sog. route request) an alle benachbarten Netzknoten ausgesendet (sog. Broadcast), welche die Weg-Anfragenachricht ebenfalls im Rahmen eines Broadcasts an die ihnen benachbarten Netzknoten weiterleiten, bis die Weg-Anfragenachricht schließlich den Zielknoten erreicht. Von dem Zielknoten wird eine Weg-Antwortnachricht (sog. route reply) initiiert. Bei der Übertragung der Weg-Anfragenachricht und bei der zielgerichteten Rückübertragung der Weg-Antwortnachricht (sog. Unicast) zu dem Quellknoten werden auf jedem Netzknoten Einträge in sog. Wegewahl-Tabellen (sog. Routing-Tabellen) erstellt. Hierdurch ergibt sich ein definierter Pfad zur Übertragung von Datenrahmen zwischen dem Quellknoten und dem Zielknoten.

Im Rahmen der vorliegenden Erfindung wird deshalb unter einem Pfad oder Datenpfad (englisch: route) die Übertragung von Datenrahmen über einen oder mehrere bestimmte Zwischenknoten zwischen dem Quellknoten und dem Zielknoten verstanden. Datenrahmen, die von dem Quellknoten zu dem Zielknoten entlang des Datenpfades übertragen werden, werden auf einer Vorwärtsroute (sog. forward route) übertragen. Werden Datenrahmen von dem Zielknoten an den Quellknoten übertragen, so wird dies in der folgenden Beschreibung als Rückwärtsroute (sog. reverse route) bezeichnet.

Bei derartigen drahtlosen, vermaschten Datennetzen besteht das Problem, dass einzelne Datenrahmen auf einem Pfad zwischen dem Quellknoten und dem Zielknoten fehlgeleitet werden können, wodurch Schleifen oder Datenschleifen entstehen. Hierdurch wird die Datenkommunikation zwischen dem Quellknoten und dem Zielknoten beeinträchtigt. Das fehlerhafte Übertragen von Datenrahmen kann bei allen bekannten Übertragungsprotokollen (sog. routing protocols) auftreten. Die Bildung solcher unerwünschter Datenschleifen kann durch fehlerhafte Netzknoten oder zufällig oder böswillig bei der Übertragung von Datenrahmen zu einem Netzknoten entstehen, der sich auf dem Pfad in Übertragungsrichtung vor dem übertragenden Netzknoten befindet. Bei der Schleifenbildung werden der oder die Datenrahmen zu einem Netzknoten weitergeleitet, welcher sich in Vorwärtsrichtung auf dem Pfad dichter am Quellknoten befindet. Im Ergebnis kann hierdurch die zur Verfügung stehende Bandbreite des Netzwerks verringert werden.

Um den fortwährenden Transport eines fehlgeleiteten Datenrahmens zu verhindern, ist es bekannt, in den Datenrahmen eine Lebensdauer-Information zu integrieren. Dies wird beispielsweise bei Datenpaketen nach dem Internetprotokoll (IP) und bei Datenpaketen gemäß der Spezifikation IEEE 802.11s umgesetzt. Die Lebensdauer-Information wird als Time to Live (ttl) bezeichnet. Dies ist ein Integer-Wert, der üblicherweise vom Sender des Datenrahmens auf 255 gesetzt wird. Bei jedem Weiterleiten des Datenrahmens zu einem neuen Netzknoten wird der Wert um 1 dekrementiert. Sobald der Lebensdauer-Wert 0 ist, wird der Datenrahmen verworfen und in dem Datennetz nicht mehr weiter transportiert.

Ein weiterer, bekannter Sicherheitsmechanismus ist das sog. "source routing". Der Empfänger eines Datenrahmens kann hierbei überprüfen, ob der Sender (Transmitter) des Datenrahmens die Erlaubnis besitzt, diesen Datenrahmen an den Empfänger weiterzuleiten. Die Überprüfung basiert dabei auf einer Pfadinformation, welche in den Datenrahmen enthalten ist.

Weiterhin bekannt ist die Verwendung von eindeutigen Sequenznummern bei der Übertragung von Datenrahmen. Hierdurch kann verifiziert werden, ob Datenrahmen bereits übertragen wurden. Anhand der Sequenznummern kann damit, wenn ein Datenrahmen bei einem Netzknoten zum zweiten oder wiederholten Male bei einem Netzknoten ankommt, auf eine Schleifenbildung geschlossen werden.

Von dem Algorithmus Ad-hoc On-demand Distance Vector Routing (AODV), wie dieser für IP MANET Routing in RFC 3561 beschrieben ist, ist die Verwendung sog. Precursor-Listen bekannt. Die Precursor-Listen werden für Fehlernotifikationen der Netzknoten verwendet. Hierbei wird eine Precursor-Liste sowohl für die Vorwärtsrichtung als auch für die Rückwärtsrichtung eines Datenpfades erstellt. Dies erfolgt während des Verarbeitens der Weg-Antwortnachricht, welche von dem Zielknoten ausgesendet wurde. Dieser Vorgehensweise liegt zu Grunde, dass beide Richtungen (Vorwärtsrichtung und Rückwärtsrichtung) demselben Pfad folgen. Die im Rahmen von AODV verwendeten Precursor-Listen können so jedoch das Auftreten von Schleifen nicht verhindern.

Ein Dokument Garcia-Luna-Aceves J J et al: "On-Demand Loop-Free Routing With Link Vectors", IEEE Journal On Selected Areas In Communications, IEEE Bd. 23, Nr. 3, Seiten 533-546, ISSN: 0733-8716, beschreibt ein On-Demand Link Vektor Protokoll, ein Routingprotokoll für Ad Hoc Netzwerke basiert auf Link State Informationen, die frei von Routingschleifen sind und eine Ziel-basierte Paketweiterleitung unterstützen.

Es ist daher Aufgabe der Erfindung, ein Verfahren bereitzustellen, mit dem bei der Übertragung von Datenrahmen in einem drahtlosen, vermaschten Datennetz Datenschleifen vermieden werden können.

Eine weitere Aufgabe der Erfindung ist es, ein Verfahren bereitzustellen, mit dem die Übertragung von Datenrahmen in einem drahtlosen, vermaschten Datennetz eine möglichst effiziente Nutzung der von dem Datennetz zur Verfügung gestellten Ressourcen erlaubt.

Diese Aufgaben werden durch ein Verfahren mit den Merkmalen des Anspruchs 1 gelöst. Vorteilhafte Ausführungsformen sind in den abhängigen Ansprüchen wiedergegeben.

Bei dem erfindungsgemäßen Verfahren zum Betreiben eines drahtlosen, vermaschten Datennetzes mit einer Mehrzahl an Netzknoten, bei dem Datenrahmen von einem Quellknoten über einen oder mehrere Zwischenknoten zu einem Zielknoten übertragen werden, stellen der Quellknoten, der eine oder die mehreren Zwischenknoten und der Zielknoten Netzknoten des Datennetzes dar. Bei der Übertragung eines Datenrahmens wird von zumindest manchen der Netzknoten, die den Datenrahmen empfangen, anhand einer dem Zielknoten des Datenrahmens zugeordneten Precursor-Liste überprüft, ob der den Datenrahmen sendende Netzknoten in der Precursor-Liste enthalten ist. Im positiven Fall wird der Datenrahmen zu einem weiteren Netzknoten übertragen. Im negativen Fall wird der Datenrahmen verworfen oder es wird eine Fehlerbehandlungsroutine durchgeführt.

Die Erfindung schlägt vor, Precursor-Listen zu verwenden, um Datenrahmen aufzuspüren, die von Netzknoten stammen, die zur Übertragung des betreffenden Datenrahmens nicht autorisiert oder vorgesehen sind. Precursor-Listen sind Listen mit einer Angabe über unmittelbare Nachbar-Netzknoten. Hierdurch können Datenschleifen in einem drahtlosen, vermaschten Datennetz vermieden werden. Durch die Vermeidung von Datenschleifen lässt sich die Verschwendung wertvoller Bandbreite in dem Datennetz vermeiden.

Damit Warteschleifen zuverlässig vermieden werden, müssen die Netzknoten überprüfen, ob der den Datenrahmen sendende Netzknoten in der Precursorliste enthalten ist. Die Überprüfung wird zweckmäßigerweise von allen Netzknoten vorgenommen. Die Überprüfung durch den Zielknoten ist nicht zwingend notwendig.

Denkbar ist auch eine Variante, in der die Überprüfung von allen Netzknoten vorgenommen wird, mit Ausnahme des Quellknotens und des Zielknotens und des Zwischenknotens unmittelbar vor dem Zielknoten. In entsprechender Weise würde die Überprüfung dann auch nicht von dem Zwischenknoten unmittelbar vor dem Quellknoten vorgenommen werden, wenn der Quellknoten das Ziel einer Nachricht ist (sog. Rückwärtspfad).

Gemäß einer Ausbildung werden für den Quellknoten, den Zielknoten und den oder die Zwischenkonten jeweils eine Wegewahl-Tabelle (eine sog. Routing-Tabelle) angelegt, wobei jede der Wegewahl-Tabellen zumindest einen Eintrag umfasst. Für jeden Eintrag der Wegewahl-Tabelle wird die Precursor-Liste angelegt, welche direkte Nachbarknoten umfasst, die einen Datenrahmen zu dem betreffenden Netzknoten übertragen können. Damit ist für jeden der Netzknoten festgelegt, von welchen benachbarten Netzknoten innerhalb eines Datenpfades Datenrahmen empfangen werden dürfen.

Die Erstellung der Wegewahl-Tabelle erfolgt im Rahmen der Übertragung einer von dem Quellknoten initiierten Weg-Anfragenachricht und einer von dem Zielknoten initiierten Weg-Antwortnachricht. Eine Weg-Anfragenachricht wird auch als Route Request-Nachricht bezeichnet. Eine Weg-Antwortnachricht ist als Route Reply-Nachricht dem Fachmann geläufig. Weg-Anfragenachrichten werden als Broadcast-Nachricht von dem Quellknoten ausgesandt. Im Gegensatz dazu erfolgt die von dem Zielknoten initiierte Wegantwortnachricht als Unicast-Nachricht. In den Wegewahl-Tabellen werden Einträge für die Vorwärtsrichtung eines Datenpfades als auch für die Rückwärtsrichtung eines Datenpfades angelegt. Die Vorwärtsrichtung eines Datenpfades erstreckt sich von dem Quellknoten zu dem Zielknoten. Die Rückwärtsrichtung ist in entsprechender Weise von dem Zielknoten zu dem Quellknoten gerichtet.

Die Erstellung und/oder Aktualisierung der Precursor-Liste wird gemäß einer weiteren Ausbildung im Rahmen der von dem Zielknoten initiierten Weg-Antwortnachricht vorgenommen.

Gemäß einer weiteren Ausbildung umfasst ein Datenrahmen die Adresse des Quellknotens, die Adresse des Zielknotens, die Adresse des sendenden Netzknotens dieses Datenrahmens und die Adresse des diesen Datenrahmens empfangenden Netzknotens. Der den Datenrahmen empfangende Netzknoten überprüft, ob die ihm zugewiesene Adresse der Adresse des Zielknotens in dem Datenrahmen entspricht. Im positiven Fall der Überprüfung wird der Datenrahmen einer weiteren Einheit zur Verarbeitung, insbesondere einer höheren Schicht im OSI-Referenzmodell, zugeführt. Dies bedeutet, dass der Datenrahmen den Zielknoten erreicht hat.

Gemäß einer weiteren Ausbildung umfasst ein Eintrag in der Precursor-Liste eine Media Access Control-Adresse (Media Access Control = MAC) oder eine IP-Adresse und eine Lebensdauer des Eintrags. Eine Precursor-Liste ist damit eine Liste von MAC- oder IP-Adressen. Elemente einer Precursor-Liste sind direkte Nachbarn (Netzknoten) des Netzknotens, welche den Datenrahmen zu diesem Netzknoten übertragen dürfen. Dies resultiert daraus, dass der den Datenrahmen übertragende Netzknoten zu dem betreffenden Netzknoten auf dem Datenpfad zu dem Zielknoten liegt. Hierbei wird eine Precursor-Liste pro Wegewahl-Tabelleneintrag erstellt. In vielen Routing-Protokollen ist dies gleichbedeutend mit einem Eintrag pro Zielknoten, da es pro Zielknoten lediglich einen einzigen Routing-Tabelleneintrag gibt. Im Ergebnis bedeutet dies, dass eine Precursor-Liste für einen Zielknoten n Einträge haben kann, wobei n ∈ [1, N] ist. N ist die Anzahl der Quellen, welche aktive Datenpfade über diesen Knoten (N ≥ 1) haben können.

Neben der Verwendung von Precursor-Listen zum Detektieren von fehlgeleiteten Datenrahmen schlägt die Erfindung eine Vorgehensweise vor, wie diese dafür verwendeten Precursor-Listen erstellt und gepflegt werden können.

Bei der Erfindung werden als Einträge in die Precursor-Listen Wertepaare einer MAC- oder IP-Adresse und einer Lebensdauer abgelegt. Die Lebensdauer des Eintrags ist vergleichbar mit dem Lebensdauer-Wert in dem AODV-Algorithmus. Das zu Grunde liegende Prinzip besteht darin, dass die Lebensdauer eines Eintrags der Precursor-Liste eines Netzknotens auf einen Ausgangswert zurückgesetzt wird, wenn dieser Netzknoten einen Datenrahmen von dem Netzknoten erhält, dessen Adresse der MAC-Adresse in dem Eintrag entspricht. Die Lebensdauern werden für Einträge in Vorwärts- als auch in Rückwärtsrichtung aktualisiert, wenn auch die Lebensdauern der Routing-Tabelleneinträge sowohl in Vorwärts- als auch in Rückwärtsrichtung bei Erhalt eines entsprechenden Datenrahmens aktualisiert werden. Ferner wird ein Eintrag in der Precursor-Liste gelöscht, wenn die Lebensdauer des Eintrags abgelaufen ist. Hierdurch kann sichergestellt werden, dass die Gefahr einer Datenschleifenbildung minimiert ist.

Die Lebensdauer eines Eintrags in der Precursor-Liste ist maximal so lang wie ein Pfad-Lebensdauerwert von dem Quellknoten zu dem Zielknoten, wobei der Pfad-Lebensdauerwert als Information in dem Routing-Tabelleneintrag enthalten ist.

Eine Aktualisierung der Lebensdauer eines Eintrags in der Precursor-Liste und dem Pfad-Lebensdauerwert in dem betreffenden Routing-Tabelleneintrag erfolgt gemäß einer Ausbildung gleichzeitig. Eine Aktualisierung der Lebensdauer kann beispielsweise auch durch Weg-Antwortnachrichten (Route Reply-Nachrichten) erfolgen. Es ist hingegen nicht vorgesehen, dass Weg-Anfragenachrichten (Route Request-Nachrichten) eine Aktualisierung der Precursor-Listen vornehmen.

Der Grund hierfür ist wie folgt: Die Precursor-Listen werden während einer sog. Route Discovery, mit welcher der Datenpfad zwischen dem Quellknoten und dem Zielknoten festgelegt werden soll, erstellt. Die grundsätzlichen Mechanismen stammen dabei aus der ursprünglichen Spezifikation zu AODV. Eine Veröffentlichung hierzu findet sich in [1]. Dabei wird das aus dem Stand der Technik bekannte Vorgehen durch das Hinzufügen von Lebensdauern zu den Einträgen der Precursor-Listen ergänzt. Die von dem Quellknoten ausgesendete Weg-Anfragenachricht an alle Netzknoten des Datennetzes erzeugt Rückwärtsrichtungen von allen Netzknoten zu dem Quellknoten. Nachdem diese Rückwärtsrouten vom Ende her, d.h. von dem Zielknoten her, gebildet werden, sind die vorhergehenden Netzknoten noch unbekannt, so dass daher in die Precursor-Liste für den Wegewahl-Tabelleneintrag des Quellenknoten nichts eingetragen werden kann. Die Weg-Antwortnachricht, welche von dem Zielknoten zu dem Quellknoten unter Verwendung eines Unicast-Mechanismus übertragen wird, führt hingegen zur Erzeugung von Einträgen in die Precursor-Listen, sowohl für die Vorwärts- als auch für die Rückwärtsroute. Die Informationen "destination node" und "source_node" werden hierbei von korrespondierenden Feldern der Weg-Antwortnachricht entnommen.

Für die Population der Routing-Tabelle werden folgende Schritte vorgenommen:
- routingtable(destination_node).create;
- routingtable(desitnation_node).lifetime.update(RREP. lifetime);
- routingtable(destination_node).precursor_list.add (routingtable(source_node)next_hop, RREP.lifetime);
- routingtable(source_node).precursor_list.add( weg-antwortnachricht.transmitter, routingtable(source_node).lifetime).

Die Erstellung einer Precursor-Liste für den entsprechenden Routing-Tabelleneintrag ist auf einem solchen Zwischenknoten nicht notwendig, wenn er bei einer Datenrahmenübertragungs-Route zwischen dem Zielknoten und dem Quellknoten dem Quellknoten benachbart ist beziehungsweise er bei einer Datenrahmenübertragungs-Route zwischen dem Quellknoten und dem Zielknoten dem Zielknoten benachbart ist. Die Erstellung einer Precursor-Liste auch in diesen Fällen vereinfacht und beschleungigt aber die Verfahren.

Sowohl AODV als auch HWMP (Hybrid Wireless Mesh Protocol) erlauben es den Zwischenknoten, auf eine Weg-Anfragenachricht mit einer Weg-Antwortnachricht zu antworten, wenn diese eine gültige Route zu dem Zielknoten kennen. In einem solchen Fall müssen die folgenden Aktualisierungen in den Wegewahl-Tabellen des Zwischenknotens, der die Weg-Anfragenachricht generiert, vorgenommen werden. Hierbei werden die Felder "destination_node" und "source_node" den korrespondierenden Feldern der Weg-Anfragenachricht entnommen:
- routingtable(destination_node).precursor_list.*add*(rou-tingtable(source_node).next_hop, routingtable(destination_node).lifetime)
- routingtable(source_node).precursor_list.*add*(routing-table(destination_node).next_hop, routingtable(source node).lifetime)

Wenn ein weiterer Netzknoten, der nicht der Quellknoten, der Zielknoten oder einer der Zwischenknoten in einem Datenpfad zwischen dem Quellknoten und dem Zielknoten ist, nach Empfang einer Weg-Anfragenachricht des Quellknotens (aber keiner Weg-Antwortnachricht) einen Datenrahmen an den Quellknoten über einen weiteren Zwischenknoten überträgt, welcher weitere Zwischenknoten der nächste Netzknoten auf einem Rückwärtspfad zum Quellknoten ist, der nicht in der Precursor-Liste des Routing-Tabelleneintrags für den Quellknoten den weiteren Netzknoten enthält, verwirft der weitere Zwischenknoten gemäß einer Ausführungsform die von dem weiteren Netzknoten empfangenen Datenrahmen.

Der zwischen dem weiteren Netzknoten und dem Quellknoten gebildete Datenpfad wird gemäß einer weiteren Ausführung in dem weiteren Netzknoten als ungültig gekennzeichnet. Um das unnötige Senden von Datenrahmen von dem weiteren Netzknoten zum Quellknoten zu vermeiden, wird ein solcher Pfad markiert, so dass der weitere Netzknoten eine Route Discovery zu dem Quellknoten durchführen kann. Dies erfolgt anstatt der Verwendung des Rückwärtspfades, der im Rahmen der Route Discovery zwischen dem Quellknoten und dem weiteren Netzknoten gebildet wurde.

In einer alternativen Ausbildung werden die Precursor-Listen für den Pfad zwischen dem weiteren Netzknoten und dem Quellknoten gefüllt, bevor der Datenrahmen von dem weiteren Netzknoten zu dem Quellknoten übertragen wird. Dies kann beispielsweise durch das Senden einer Weg-Antwortnachricht vom weiteren Netzknoten an den Quellknoten erfolgen.

In einer weiteren alternativen Ausgestaltungsform werden bei Erhalt einer Weg-Anfragenachricht die Adressen aller zu einem Netzknoten benachbarten Netzknoten zusammen mit einem Ablaufwert bei Erhalt einer Weg-Anfragenachricht in die Precursor-Liste dieses Netzknotens als zeitweiliger Eintrag eingetragen.

Gemäß einer weiteren Ausgestaltung wird hierbei der zu dem Netzknoten benachbarte Netzknoten, der die Weg-Anfragenachricht ausgesendet hat, nicht in die Precursor-Liste dieses Netzknotens eingetragen.

Eine weitere Ausgestaltung sieht vor, dass der zeitweilige Eintrag in der Precursor-Liste mit einem Ablaufwert (wie z.B. einem TTL (Time-to-Live-Wert) im Internet Protocol Header, z.B. IPV4) versehen wird, welcher denselben Wert aufweist wie der Rückwärtspfad, der durch die Weg-Anfragenachricht aufgebaut wurde.

In einer weiteren optionalen Ausgestaltung können die zeitweiligen Einträge aus der Precursor-Liste gelöscht werden, wenn ein Eintrag in die Precursor-Liste im Rahmen der von dem Zielknoten initiierten Weg-Antwortnachricht erstellt wird.

Das gleiche Problem existiert auch mit pro-aktiven Weg-Anfragenachrichten bei einer pro-aktiven Erweiterung für das sog. Tree Routing in HWMP. Der undirektionale Baum von dem Ausgangsknoten (root tree) wird durch eine Weg-Anfragenachricht angestoßen, wobei die Weg-Anfragenachricht zu allen, mit dem Ausgangsknoten verbundenen Netzknoten übertragen wird. Dieses Vorgehen erzeugt den Rückwärtspfad zu dem Ausgangsnetzknoten, wobei jedoch die Precursor-Liste nicht erzeugt werden kann. HWMP bedient sich dabei einer ähnlichen Lösung wie von der Erfindung vorgeschlagen. Wenn ein proaktives Weg-Antwortnachricht-Flag gesetzt ist, wird eine Weg-Antwortnachricht in Reaktion auf eine Weg-Anfragenachricht ausgesendet. Hierdurch kann die Precursor-Liste wie üblich gefüllt werden. Wenn das pro-aktive Weg-Antwortnachricht-Flag nicht gesetzt ist, kann eine Weg-Antwortnachricht vor den Datenrahmen gesendet werden, so dass die Precursor-Liste "just in time" erstellt wird.

Die Erfindung stellt einen simplen Mechanismus zum Aufspüren von fehlgeleiteten Datenrahmen dar, um die Erzeugung von Datenschleifen aufgrund eines absichtlichen oder fehlerhaften Weiterleitens zu vermeiden. Dies wird durch die Verwendung von Precursor-Listen zum Aufspüren der fehlgeleiteten Datenrahmen bewerkstelligt. Dabei wird der Sender des Datenrahmens mit in der Precursor-Liste befindlichen erlaubten Vorgängern (= Sendern oder Transmittern) verglichen. Die Erfindung erweitert dabei den Mechanismus von Precursor-Listen, wie dieser für AODV spezifiziert ist. Einem Eintrag ist eine Lebensdauer in der Precursor-Liste zugeordnet, so dass der Inhalt der Precursor-Liste nun zu den aktiven Datenpfaden in dem drahtlosen, vermaschten Datennetz korrespondiert.

Die Erfindung wird nachfolgend weiter unter Bezugnahme auf die Figuren erläutert. Es zeigen:
- Fig. 1: ein vermaschtes Datennetz mit einer Mehrzahl an Netzknoten, anhand dem das der Erfindung zu Grunde liegende Verfahren erläutert wird,
- Fig. 2: eine Darstellung, aus der in der Beschreibung verwendete Definitionen von Begriffen hervorgehen,
- Fig. 3-8: jeweils Routing-Tabellen für die in Fig. 1 gezeigten Netzknoten, wobei die Population der Routing-Tabellen sowie darin enthaltener Precursor-Listen beim Aufbau eines Datenpfads zwischen zwei der Netzknoten des Datennetzes aus Fig. 1 erläutert wird, und
- Fig. 9: eine Legende für die in den Fig. 3 bis 8 verwendeten Bezeichnungen.

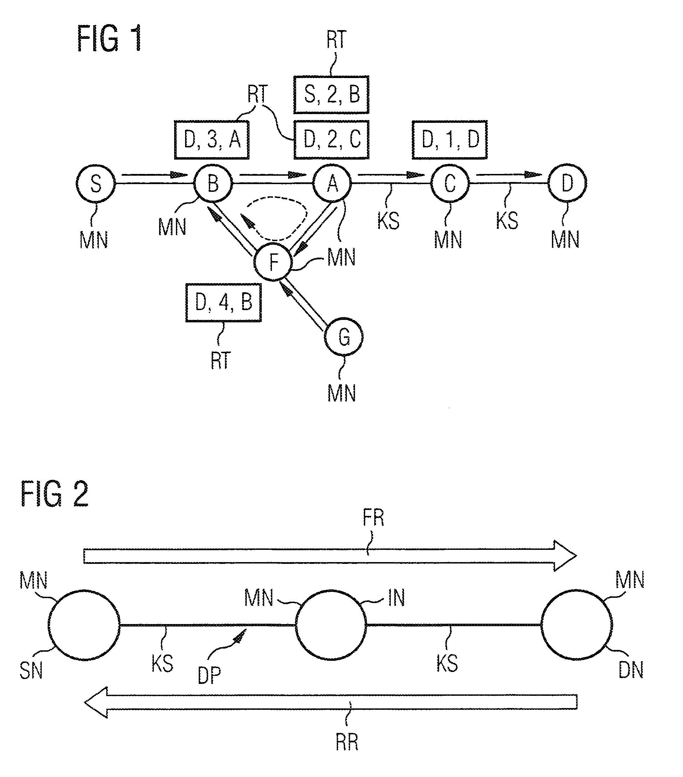

Fig. 1 zeigt exemplarisch ein vermaschtes Datennetz mit einer Mehrzahl an Netzknoten MN. Die Netzknoten MN sind teilweise untereinander über Kommunikationsstrecken KS miteinander zum Datenaustausch verbunden. Die Kommunikationsstrecken KS sind drahtlos ausgebildet. Jedem der Netzknoten MN ist eine eindeutige Adresse zugewiesen, anhand welcher eine Übertragung von Datenrahmen von einem Quellknoten zu einem Zielknoten möglich ist. In der Fig. 1 sind die Adressen der Netzknoten MN mit den Bezugszeichen S, B, A, C, D, F und G gekennzeichnet. Die Übertragung eines Datenrahmens von einem Netzknoten MN zu einem benachbarten Netzknoten MN über die Kommunikationsstrecke KS ist durch einen Pfeil gekennzeichnet. Die Übertragung von Datenrahmen von einem Quellknoten des Datennetzes zu einem Zielknoten des Datennetzes über einen oder mehrere Zwischenknoten, wobei Quellknoten, Zielknoten und Zwischenknoten durch Netzknoten des Datennetzes gebildet sind, erfolgt hop-by-hop, also von Netzknoten zu Netzknoten.

Sollen z.B. von dem Quellknoten S Datenrahmen zu dem Zielknoten D des Datennetzes aus Fig. 1 übertragen werden, so muss zunächst ein Datenpfad ermittelt werden, in welchem die zwischen dem Quellknoten S und dem Zielknoten D gelegenen Zwischenknoten (im Ausführungsbeispiel die Netzknoten B, A und C) ermittelt werden, wobei dem jeweiligen Netzknoten Wegewahl-Tabellen zugeordnet sind. In der nachfolgenden Beschreibung werden die Wegewahl-Tabellen als Routing-Tabellen bezeichnet. Diese sind in Fig. 1 mit den Bezugszeichen RT versehen. In dem dargestellten Ausführungsbeispiel umfasst ein Eintrag einer Routing-Tabelle RT drei Werte. Der erste Wert gibt die Adresse des Zielknotens an. Der zweite Wert stellt eine Pfadmetrik dar, was gleichbedeutend ist mit der Anzahl der hops bis zu dem zu erreichenden Zielknoten. Der dritte Wert stellt die Adresse des Netzknotens dar, zu welchem der Datenrahmen als nächstes übertragen werden soll. Dies wird auch als "next hop" bezeichnet.

Die Ermittlung des Datenpfades erfolgt mittels einer sog. "route discovery", welche vom Betrieb eines drahtlosen, vermaschten Datennetzes hinlänglich bekannt sind. Hierzu wird von dem Quellknoten S eine Weg-Anfragenachricht erzeugt und an sämtliche, mit dem Quellknoten verbundene Netzknoten übertragen. Dieses als Broadcast bezeichnete Übertragungsverfahren wird ebenfalls von den Zwischenknoten durchgeführt, welche eine derartige Weg-Anfragenachricht, nachfolgend Route Request-Nachricht oder Route Request, erhalten haben. Erhält der Zielknoten D eine derartige Route Request-Nachricht, so antwortet er mit einer Weg-Antwortnachricht, nachfolgend als Route Reply oder Route Reply-Nachricht bezeichnet. Im Gegensatz zu der Route Request-Nachricht ist diese jedoch zielgerichtet an den Quellknoten S übertragen. Dies wird auch als Unicast bezeichnet.

Im Rahmen der Route Discovery können die Routing-Tabellen jeweiliger Zwischenknoten in einem Datenpfad erstellt und gefüllt werden.

Fig. 2 zeigt eine bei der Beschreibung von vermaschten Datennetzen übliche Konvention. Der Einfachheit halber ist hierbei zu Grunde gelegt, dass der Quellknoten SN über lediglich einen Zwischenknoten IN mit dem Zielknoten DN verbunden ist. Zwischen dem Quellknoten SN und dem Zwischenknoten IN bzw. zwischen dem Zwischenknoten IN und dem Zielknoten DN ist jeweils eine drahtlose Kommunikationsstrecke KS ausgebildet. Die Netzknotens SN, IN und DN liegen in einem Datenpfad DP, über welchen die Datenrahmen übertragen werden. Der Datenpfad DP ist über das oben beschriebene Route Discovery-Verfahren ermittelt worden. Datenrahmen, die von dem Quellknoten SN an den Zielknoten DN übertragen werden, werden in Vorwärtsrichtung bzw. auf einer Vorwärtsroute FR übertragen. Datenrahmen, die von dem Zielknoten DN an den Quellknoten SN übertragen werden, werden in Rückwärtsrichtung oder auf einer Rückwärts-route RR übertragen. Nachfolgend wird auf diese Konvention Bezug genommen werden.

Bei der folgenden kurzen Beschreibung der Problemstellung anhand der Fig. 1 wird davon ausgegangen, dass der Datenpfad zwischen dem Netzknoten S als Quellknoten und dem Netzknoten D als Zielknoten wie folgt lautet: S-B-A-C-D. Ein weiterer Datenpfad soll zwischen dem Netzknoten G als Quellknoten und dem Netzknoten D als Zielknoten gebildet sein. Der Datenpfad hierfür lautet beispielsweise: G-F-B-A-C-D.

Der Netzknoten B, welcher einen Zwischenknoten darstellt, weist einen Routing-Tabelleneintrag auf, in welchem als Zielknoten der Netzknoten D enthalten ist. Bis zum Erreichen des Netzknotens D sind drei Hops notwendig, wobei ein von B erhaltener Datenrahmen an den Netzknoten A (ebenfalls ein Zwischenknoten) übertragen werden muss. In entsprechender Weise weist der Netzknoten A einen Routing-Tabelleneintrag auf, in welchem der Netzknoten D als Zielknoten enthalten ist. Bis zum Erreichen des Zielknotens D sind zwei Hops notwendig, wobei ein von A erhaltener Datenrahmen an den Netzknoten C (ein Zwischenknoten) übertragen werden muss. In entsprechender Weise weist der Netzknoten C einen Routing-Tabelleneintrag auf, in welchem der Netzknoten D als Zielknoten enthalten ist. Bis zum Erreichen des Zielknotens D ist ein Hop notwendig, wobei ein von C erhaltener Datenrahmen an den Netzknoten D (den Zielknoten) übertragen werden muss. Erhält der Netzknoten F (ebenfalls ein Zwischenknoten) einen Datenrahmen für den Zielknoten D, so erhält dieser aus einem Routing-Tabelleneintrag die Information, dass bis zu dem Zielknoten vier Hops zu absolvieren sind. Von dem Netzknoten F erhaltene Datenrahmen müssen an den Netzknoten B weiter übertragen werden.

Bei einem Fehlverhalten des Netzknotens A, welches absichtlicher oder fehlerhafter Natur sein kann, kann es vorkommen, dass Datenrahmen nicht zu dem Netzknoten C, sondern zu dem Netzknoten F übertragen werden. Dies kann beispielsweise durch die Informationen aus der Weg-Anfragenachricht unterstützt werden, die Netzknoten A von Netzknoten F erhalten hat. Hieraus ergibt sich die in Fig. 1 mit dem durchbrochenen Pfeil gekennzeichnete Datenschleife. Der Netzknoten F wird nämlich, aufgrund seines Routing-Tabelleneintrags den Datenrahmen an B weiterleiten, welcher seinerseits den Datenrahmen wiederum an A überträgt.

Da diese Schleifenbildung wertvolle Bandbreite in einem drahtlosen vermaschten Datennetz kostet, werden bei der Erfindung die Routing-Tabelleneinträge jeweils um eine Precursor-Liste ergänzt. Durch das Vorsehen der Precursor-Listen können Datenrahmen von solchen Netzknoten festgestellt werden, welche diese nicht zu dem, den Datenrahmen empfangenden Netzknoten senden dürfen. Hierdurch lassen sich Datenschleifen vermeiden.

Jede Precursor-Liste, welche pro Routing-Tabelleneintrag erstellt wird, stellt eine Liste von Media Access Control (MAC)-Adressen dar. Elemente der Precursor-Liste sind direkte Nachbar-Netzknoten des eine Precursor-Liste aufweisenden Netzknotens, die entsprechend der durch das Routing-Protokoll ermittelten Routen Datenrahmen zu diesem Netzknoten übertragen. Eine Precursor-Liste eines Routing-Tabelleneintrages eines Netzknotens kann damit n ∈ [1, N] Einträge aufweisen, wobei N die Anzahl der Quellknoten ist, die einen aktiven Datenpfad über den betreffenden Knoten haben.

In dem Standard IEEE 802.11s (WLAN Mesh Networking) ist ein Format für Datenrahmen definiert, welches sechs Adressen umfasst. Der darin definierte Datenrahmen umfasst u.a. die Adresse des Netzknotens, der den Datenrahmen überträgt (transmitter address). Dieser Netzknoten ist der vorhergehende Netzknoten (hop) in dem Datenpfad. Dieser stellt damit mit anderen Worten den Vorgänger oder Precursor dar. Diese Adresse, d.h. die Transmitter-Adresse, wird mit der Adresse verglichen, welche in der Precursor-Liste auf dem Pfad zu dem gewünschten Zielknoten enthalten ist. Wenn der Empfängerknoten der Zielknoten ist, braucht der Vergleich nicht mehr durchgeführt zu werden, da das Übertragen eines Datenrahmens zu dem Zielknoten zu keiner Datenschleife führen wird.

Zur Durchführung des Verfahrens werden drei Adressen benötigt. Adresse des Zielknotens, Adresse des Netzknotens, der den Datenrahmen überträgt, sowie die Adresse des Netzknotens, der den Datenrahmen empfängt. Wie erläutert, findet ein Vergleich statt, ob die Zieladresse der Adresse des den Datenrahmen empfangenden Netzknotens entspricht. Ist dies der Fall, so wird der empfangene Datenrahmen einer höheren Verarbeitungsschicht zugeführt. Entspricht die Zieladresse nicht der Adresse des den Datenrahmen empfangenden Netzknotens, so wird überprüft, ob die Adresse des sendenden Netzknotens (Transmitter) in der Precursor-Liste des Routing-Tabelleneintrages für den Zielknoten enthalten ist. Ist dies der Fall, so wurde der Datenrahmen korrekt übertragen. Der den Datenrahmen empfangende Netzknoten überträgt diesen daraufhin an den Netzknoten, welcher in dem entsprechenden Routing-Tabelleneintrag als Next Hop enthalten ist. Im Falle einer negativen Überprüfung wird der Datenrahmen als fehlgeleitet betrachtet, da der Transmitter nicht der vorhergehende Netzknoten auf dem Datenpfad ist und deshalb den Datenrahmen nicht zu diesem Nachbar hätte übertragen dürfen. Der Datenrahmen wird deshalb entweder verworfen oder einer Fehlerbehandlungsroutine zugeführt.

Die Einträge der Precursor-Listen sind ferner jeweils um einen Lebensdauer-Wert (life time) ergänzt. Ein Eintrag in einer Precursor-Liste enthält damit das Wertepaar {MAC-Adresse, Lebensdauer}. Die Ergänzung um Lebensdauer-Werte ermöglicht eine Korrespondenz der Precursor-Listen zu den aktiven Datenpfaden in dem Datennetz. Mit anderen Worten wird damit sichergestellt, dass die Einträge in den Precursor-Listen auch nur für aktive Datenpfade vorgesehen sind.

Wenn die Lebensdauer eines Eintrags in der Precursor-Liste abläuft, wird der entsprechende Eintrag aus der Precursor-Liste gelöscht. Die Überprüfung bzw. Aktualisierung eines Lebensdauer-Werts erfolgt immer dann, wenn ein Datenrahmen von einem Netzknoten empfangen wird und ein entsprechender Precursor-Listeneintrag vorhanden ist. Die Lebensdauer der Precursor-Listeneinträge können hierbei in beiden Richtungen, d.h. in Vorwärtsrichtung und in Rückwärtsrichtung des Datenpfades aktualisiert werden. Dies korrespondiert zu dem bei AODV/HWMP beschriebenen Vorgehen.

Der neue Wert eines Lebensdauereintrags ist der maximal mögliche Wert für die Lebensdauer. Zweckmäßigerweise ist kein Lebensdauer-Wert eines Precursor-Listeneintrages größer als eine korrespondierende Lebensdauer des Datenpfades. Grundsätzlich erfolgt eine Aktualisierung eines Lebensdauer-Wertes in der Precursor-Liste zusammen mit der Aktualisierung des Lebensdauer-Werts eines Routing-Tabelleneintrages. Die Lebensdauer-Werte der Precursor-Listeneinträge werden auch aktualisiert, wenn Route Reply-Nachrichten über den betreffenden Netzknoten laufen. Route Request-Nachrichten sorgen hingegen nicht für eine Aktualisierung des Precursor-Listen-Lebensdauereintrages.

Die den Routing-Tabelleneinträgen zugeordneten Precursor-Listen werden ebenfalls im Rahmen der Route Discovery erzeugt. Dabei kann ein besonderer Fall während des Route Discovery-Prozesses auftreten. Wenn der Quellknoten S mit dem Zielknoten D kommunizieren möchte, wird durch den Quellknoten S eine Route Discovery initiiert, wodurch eine Route Request-Nachricht zu allen Netzknoten in dem Datennetz übertragen wird. Die Route Request-Nachricht erzeugt Rückpfade von allen Netzknoten zu dem Quellknoten S. Wie eingangs erläutert, wird jedoch lediglich ein einziger Datenpfad zwischen dem Quellknoten S und dem Zielknoten D gebildet, auf welchem der Zielknoten D eine Route Reply zurücksendet. Diese Route Reply-Nachricht führt dazu, dass die Precursor-Listen in den Netzknoten erzeugt werden, wobei dies lediglich in solchen Netzknoten erfolgt, die auf dem Datenpfad zwischen S und D liegen. Der Datenpfad ist, wie eingangs erläutert, S-B-A-C-D. In den anderen Netzknoten, im Ausführungsbeispiel die Netzknoten F und G, werden derartige Precursor-Listen in den zugehörigen Routing-Tabelleneinträgen jedoch nicht erzeugt. Nichtsdestotrotz ist ein Rückpfad von dem Netzknoten G zu dem Quellknoten S tatsächlich gültig.

Wenn der Netzknoten G einen Datenrahmen zu dem Quellknoten S auf diesem Rückpfad überträgt, so sendet dieser einen Datenrahmen zu dem nächsten Netzknoten, welcher im Ausführungsbeispiel der Netzknoten F ist. Allerdings weist der Netzknoten F, welcher benachbart zu dem Netzknoten G liegt, keinen Precursor-Listeneinträg für den Netzknoten G auf. Daher werden die von G übertragenen Datenrahmen auf dem Netzknoten F verworfen, obwohl diese auf einem an sich gültigen Pfad übertragen wurden.

Zur Lösung dieses Problems stehen drei Möglichkeiten zur Verfügung.
1. Der zwischen G und S gebildete Rückpfad wird als ungültiger Pfad betrachtet. Um das unnötige Senden von Datenrahmen zu vermeiden, muss dieser Pfad entsprechend markiert werden, so dass der Netzknoten G eine Route Discovery zum Netzknoten S initiieren kann, anstatt den Rückpfad zu S zu nutzen, der von der durch S initiierten Route Discovery initiiert wurde.
2. Es können Precursor-Listen erzeugt werden, indem eine Route Reply-Nachricht an S übertragen wird, bevor die eigentlichen Datenrahmen von G nach S übertragen werden.
3. Alternativ können die Adressen aller benachbarten Netzknoten in die Precursor-Liste für den Rückpfad eingefügt werden. Dies ist nicht notwendig für den Netzknoten, welcher die Route Request-Nachricht ausgesendet hat. Für den Netzknoten F wären dies die benachbarten Netzknoten A und G. Der benachbarte Netzknoten B braucht nicht in die Precursor-Liste aufgenommen werden, da er die Route Request-Nachricht ausgesendet hat. Diese Einträge werden mit einem Time out versehen, welcher denselben Wert aufweist wie die Rückwärtsroute, die durch die Route Request-Nachricht aufgebaut wurde. Diese einfache Lösung hat jedoch den Nachteil, dass eine kurze Zeitdauer während der Route Discovery gegeben ist, während der kein Schutz gegen Datenschleifenbildung gegeben ist.

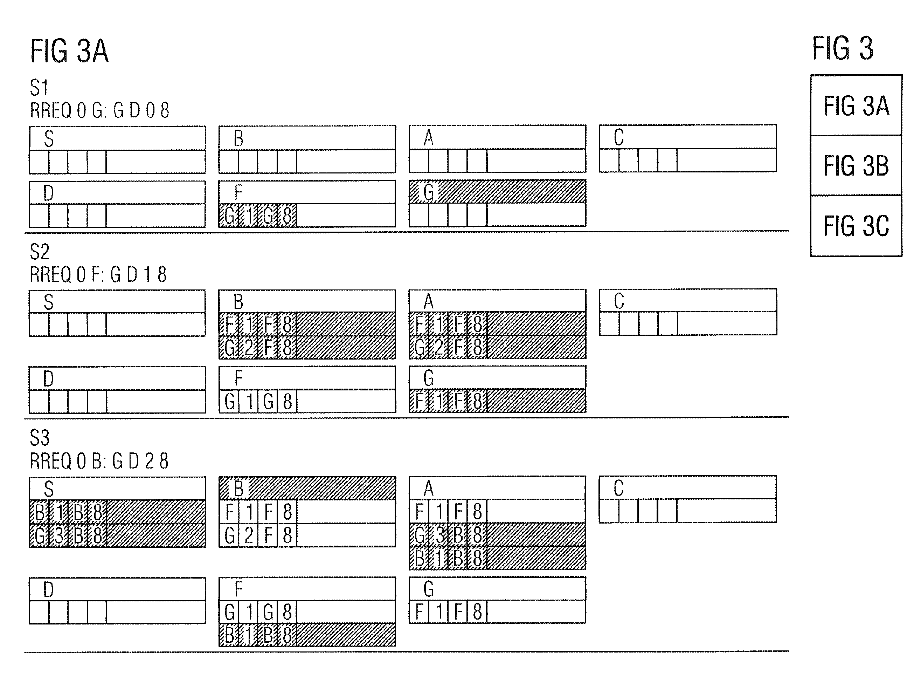

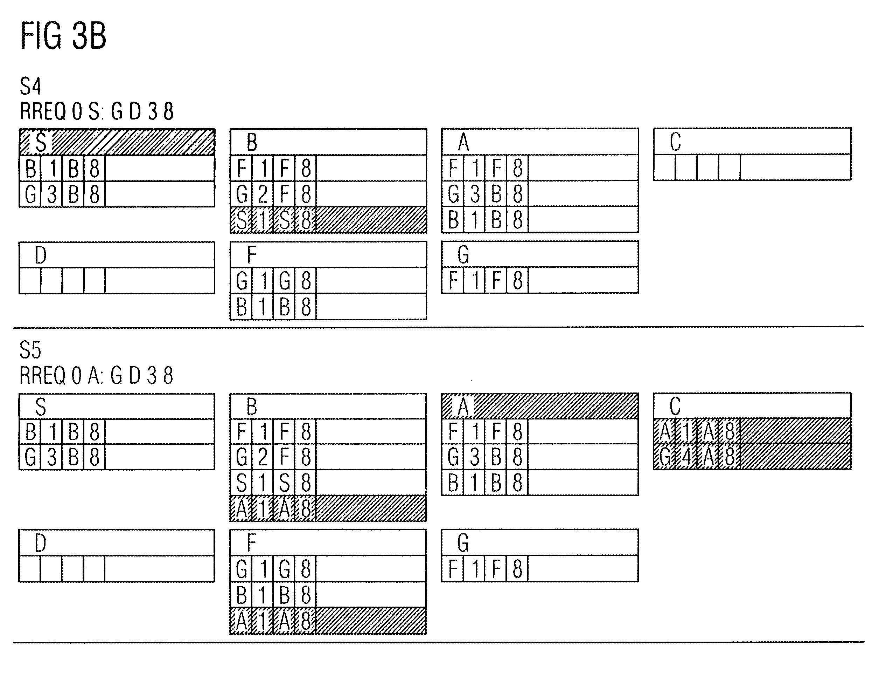

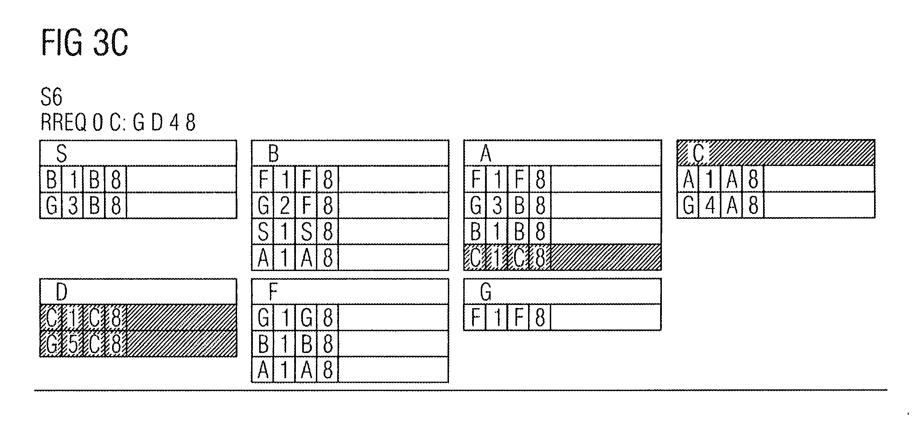

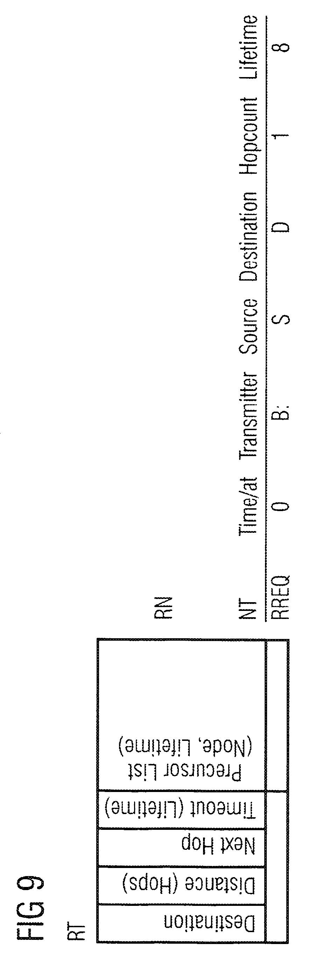

In den nachfolgenden Figuren 3 bis 8 wird nunmehr erläutert, auf welche Weise die Routing-Tabelleneinträge mit den zugeordneten Precursor-Listen erzeugt werden, wobei dies unter Bezugnahme auf das in Fig. 1 dargestellte Datennetz erfolgt. Fig. 9 zeigt für das bessere Verständnis eine Legende für die in den Fig. 3 bis 8 gewählten Bezeichnungen.

Eine Routing-Tabelle RT umfasst fünf Einträge: die Adresse eines Zielknotens ("destination"), die Anzahl der bis zu dem Zielknoten in dem Datenpfad liegenden Zwischenknoten ("distance (hops)"), die Adresse des nächsten Netzknotens ("next hop"), einen Lebensdauer-Wert für den Routing-Tabelleneintrag ("time out (life time)") sowie eine Precursor-Liste, wobei jeder Eintrag der Precursor-Liste die Adresse eines Netzknotens sowie einen Lebensdauereintrag umfasst ("precursor list (node, life time)")

Im Rahmen der Beschreibung werden zwei Arten von Nachrichten-Typen NT verwendet. Mit RREQ ist eine Route Request oder Weg-Anfragenachricht bezeichnet. Mit RREP ist eine Route Reply-Nachricht oder Weg-Antwortnachricht bezeichnet. Beide Routing-Nachrichten RN umfassen folgende Werte: Zeitpunkt ("time/at"), Adresse des sendenden Netzknotens ("transmitter"), Adresse des Quellknotens ("source"), Adresse des Zielknotens ("destination"), Anzahl der Netzknoten bis zum Zielknoten ("hop count"), Lebensdauer ("life time").

In Fig. 3 wird in Schritten S1 bis S6 der Aufbau eines Datenpfades zwischen dem Netzknoten G als Quellknoten und dem Netzknoten D als Zielknoten dargestellt. Dabei wird insbesondere ersichtlich, wie nach Aussendung einer Route Request-Nachricht durch den Quellknoten G die Routing-Tabellen eines jeden der Netzkoten S, B, A, C, D, F und G erzeugt werden. Die hervorgehobenen Felder in den einzelnen Tabellen zeigen den Sender der Route Request-Nachricht und diejenigen Felder in einer Routing-Tabelle, die aufgrund einer Verarbeitung der Route Request-Nachricht eine Veränderung nach sich gezogen haben.

In Schritt S1 wird eine Route Request-Nachricht RREQ von dem Netzknoten G ausgesendet. Der Netzknoten G stellt damit den Transmitter der Nachricht dar. Gleichzeitig stellt G den Quellknoten des Datennetzes dar, so dass im Feld "source" ebenfalls G eingetragen ist. Als Ziel enthält die Route Request-Nachricht den Netzknoten D (destination). Da Transmitter und Quelle der Nachricht identisch sind, wird für den Wert hop count 0 eingetragen. Als Lebensdauer-Wert wird willkürlich der Wert 8 gewählt. In den zugehörigen Routing-Tabellen der Netzknoten G und F ist ersichtlich, dass G der Sender der Nachricht ist. In der Routing-Tabelle des Netzknotens F, welcher die Route Request-Nachricht RREQ von G erhält, werden Informationen bezüglich der Rückwärtsroute gespeichert. Als Ziel (destination) wird deshalb die Adresse des Netzknotes G erfasst, da dieser der Quellknoten der Route Request-Nachricht ist. Die Distanz zu diesem beträgt einen Hop. Um zu dem Ziel der Rückwärts-Route, der Source, zu gelangen, muss als nächster Knoten (next hop) der Knoten G erreicht werden. Als Lebenszeit für den Routing-Tabelleneintrag für die Rückwärts-Route zum Quellknoten G werden aus der Route Request-Nachricht die 8 Zeiteinheiten gewählt.

In Schritt S2 wird die Route Request-Nachricht RREQ an die mit Netzknoten F über Kommunikationsstrecken KS verbundenen Netzknoten gesandt. Dies sind im Ausführungsbeispiel nach Fig. 1 die Netzknoten B, A und G. Die Route Request-Nachricht RREQ enthält folgende Informationen: Sender, d.h. Transmitter, der Nachricht ist der Netzknoten F. Die Route Request-Nachricht RREQ wurde durch den Quellknoten G initiiert, so dass dieser im Feld Source eingetragen ist. Ziel ist weiterhin der Zielknoten D, weshalb dieser im Feld Destination eingetragen ist. Die Netzknoten F und G sind einen hop count voneinander entfernt. Die Lebensdauer verbleibt bei dem festgesetzten Wert 8. In jedem der Netzknoten B, A und G, die die Route Request-Nachricht von F erhalten, werden jeweils Routing-Tabelleneinträge angelegt: in den Netzknoten B und A sowohl für den Transmitter-Netzknoten F als auch für den Quellknoten G, im Netzknoten G nur für den Transmitter-Netzknoten F. Die Distanz zu dem Ziel der Rückwärts-Route (Source) wird auf den Wert 2 angepasst.

Auf diese Weise wird die Route Request-Nachricht RREQ weitertransportiert, bis diese schließlich in Schritt S6 den Zielknoten D erreicht. Der Netzknoten D weist zwei Routing-Tabelleneinträge auf, von denen einer für den Netzknoten C als Ziel und einer für den Netzknoten G als Ziel Informationen enthalten.

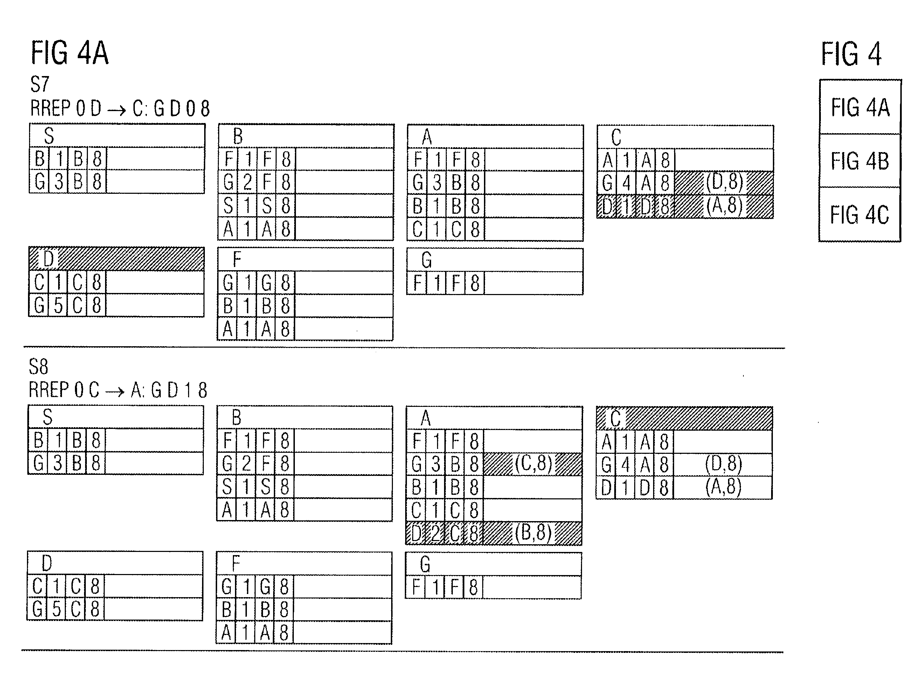

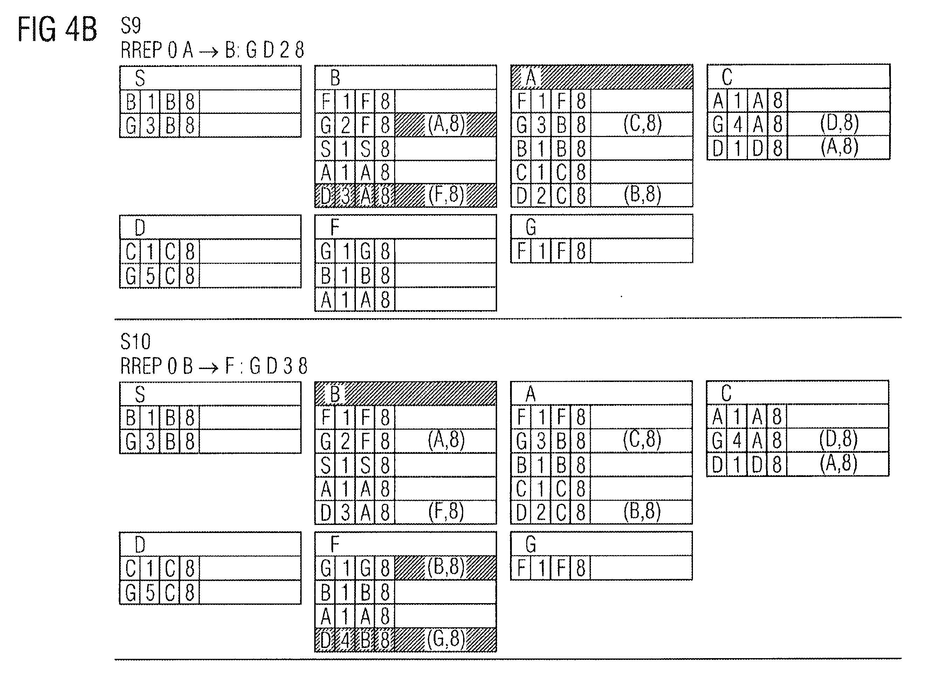

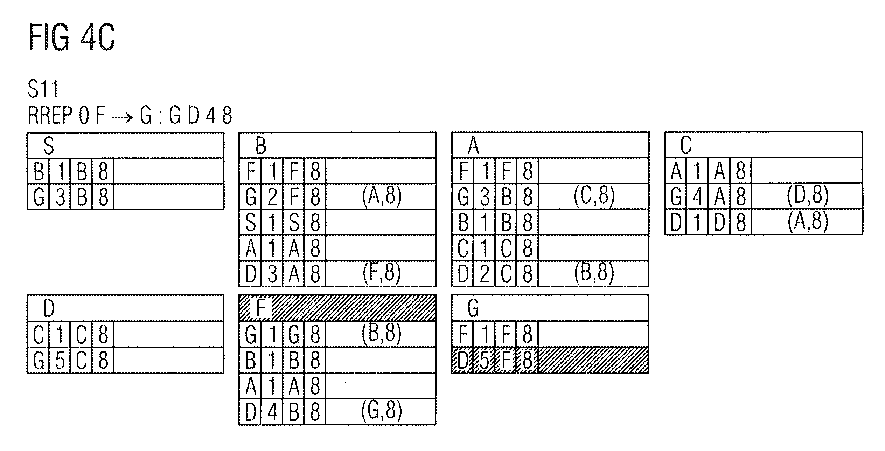

In Fig. 4 sind in Schritten S7 bis S11 Route Reply-Nachrichten dargestellt, welche von dem Zielknoten D ausgesendet ist. Hierbei ist der Quellknoten G Empfänger der Route Reply-Nachricht. Hierbei ist den jeweiligen Routing-Tabellen zu entnehmen, dass für manche der Routing-Tabelleneinträge eine Precursor-Liste, umfassend die Adresse des vorhergehenden Netzknotens in dem Datenpfad und einen Lebensdauer-Wert, eingetragen sind.

Die Aussendung der Route Reply-Nachricht erfolgt durch den Netzknoten D. Die Übertragung der Route Reply-Nachricht erfolgt an den benachbarten Netzknoten C. Im Feld "source" steht weiterhin der Quellknoten G, welcher die Route Request-Nachricht initiiert hat. Zielknoten ist weiterhin Netzknoten D, zu welchem der Quellknoten G einen Datenpfad etablieren möchte. Die hop counts werden aus Sicht des Senders der Route Reply-Nachricht gezählt, weswegen der Wert 0 beträgt. Die Lebensdauer ist entsprechend der Lebensdauer aus der Route Request-Nachricht auf 8 gesetzt, kann jedoch prinzipiell willkürlich gewählt werden. Der Netzknoten C, der die Route Reply-Nachricht vom Netzknoten D empfängt, kann nun einerseits einen neuen Routing-Tabelleneintrag für den Netzknoten D anlegen. Andererseits kann für die Routing-Tabelleneinträge zu den Netzknoten G und D (jeweils destination) ein Precursor-Listeneintrag angelegt werden. Soll eine Nachricht von dem Netzknoten C zu dem Netzknoten G als Ziel gesendet werden, so stellt Netzknoten D den Vorgänger im Datenpfad dar. Soll hingegen vom Netzknoten C ein Datenrahmen zu dem Netzknoten D als Empfänger gesendet werden, so stellt Netzknoten A den Vorgänger in dem Datenpfad dar. Diese Information kann dem Routing-Tabelleneintrag zum Netzknoten G als Empfänger entnommen werden, da hier A als next hop enthalten ist.

In entsprechender Weise wird die Route Reply-Nachricht von Netzknoten C an Netzknoten A und von diesem an Netzknoten B, schließlich an Netzknoten F und dann an Netzknoten G transportiert. Hierbei werden jeweils in der beschriebenen Weise Routing-Tabelleneinträge ergänzt und jeweilige Precursor-Listen erzeugt.

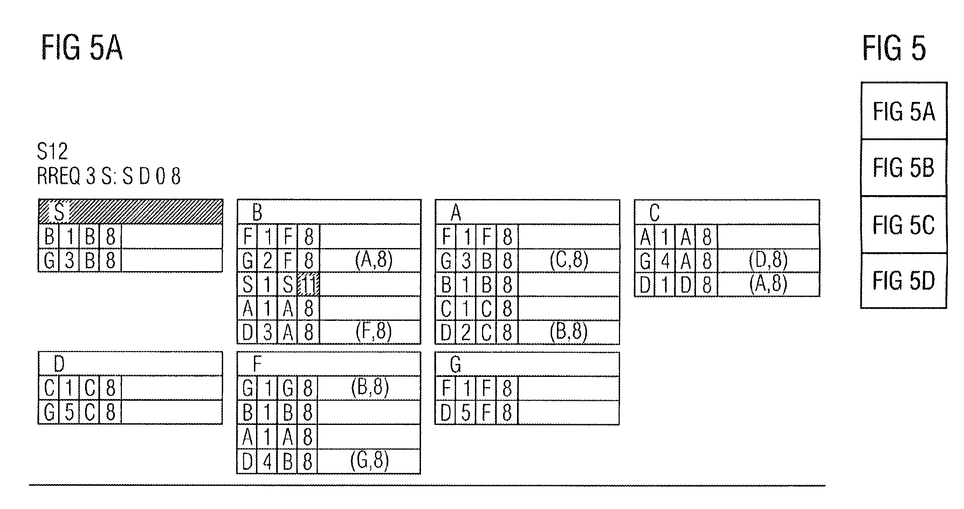

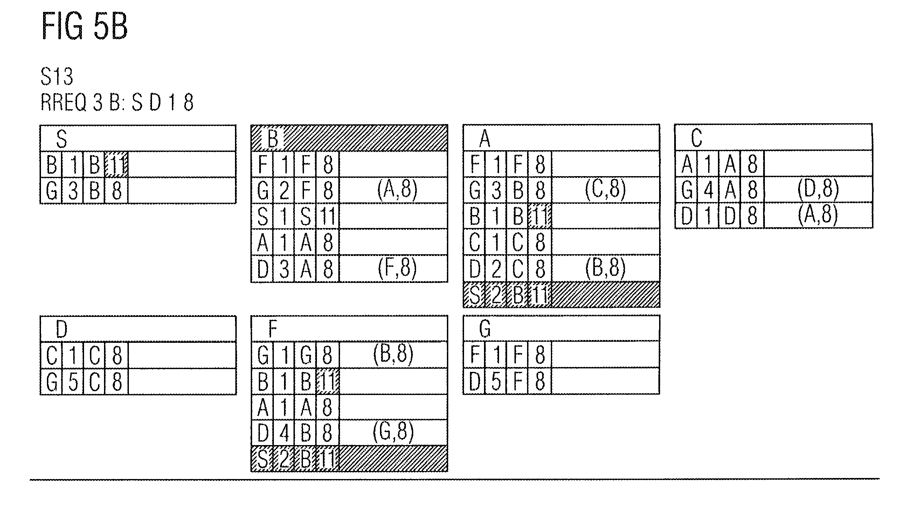

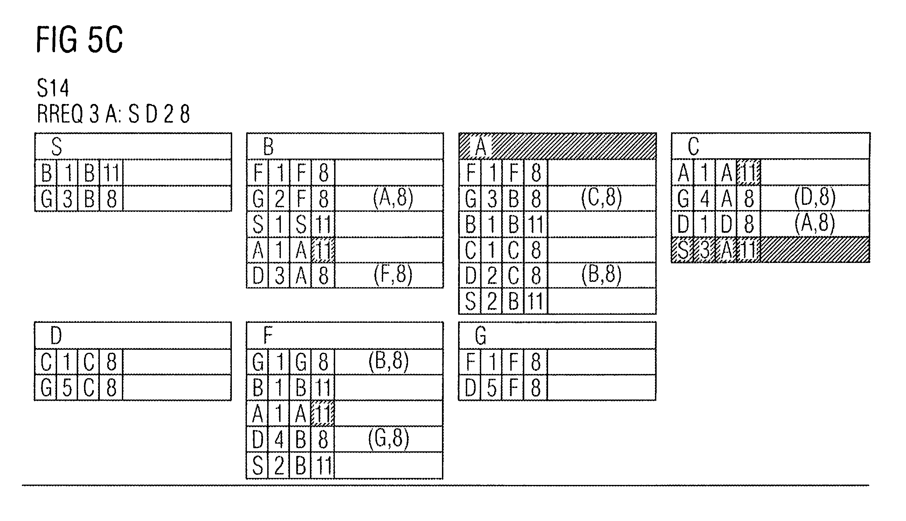

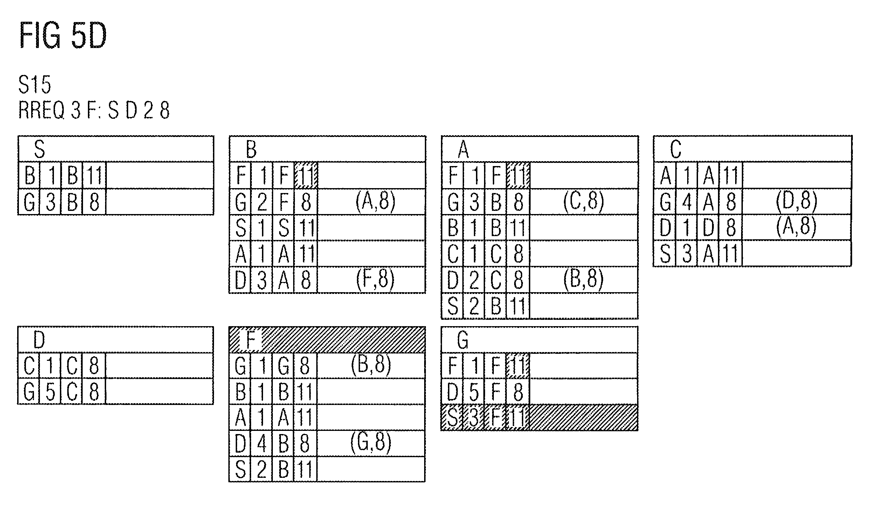

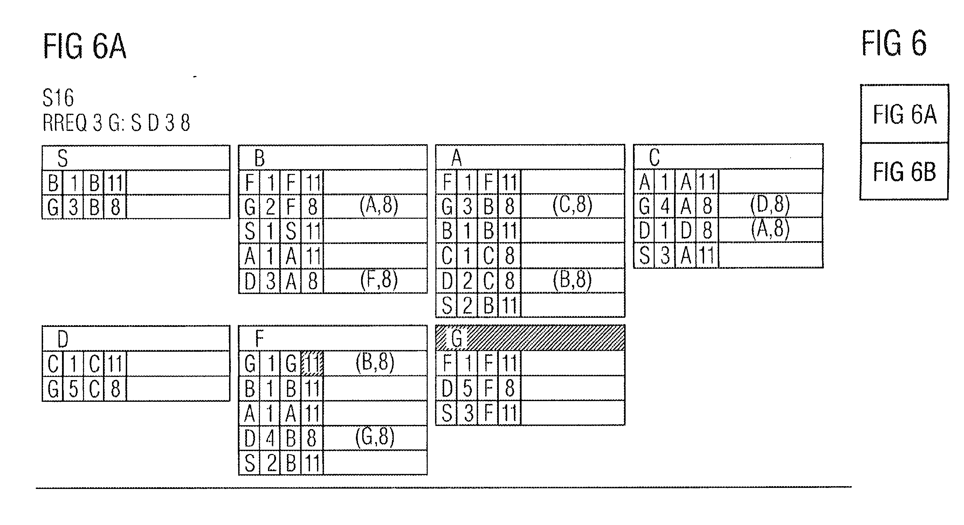

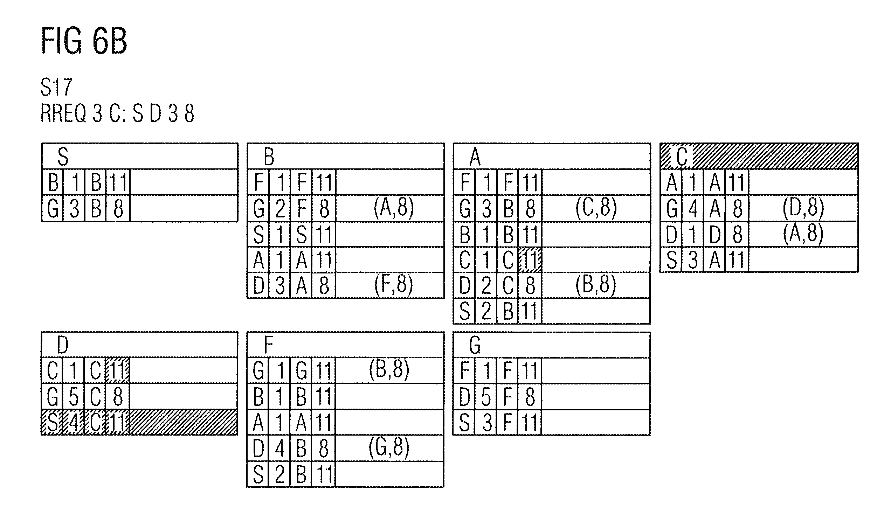

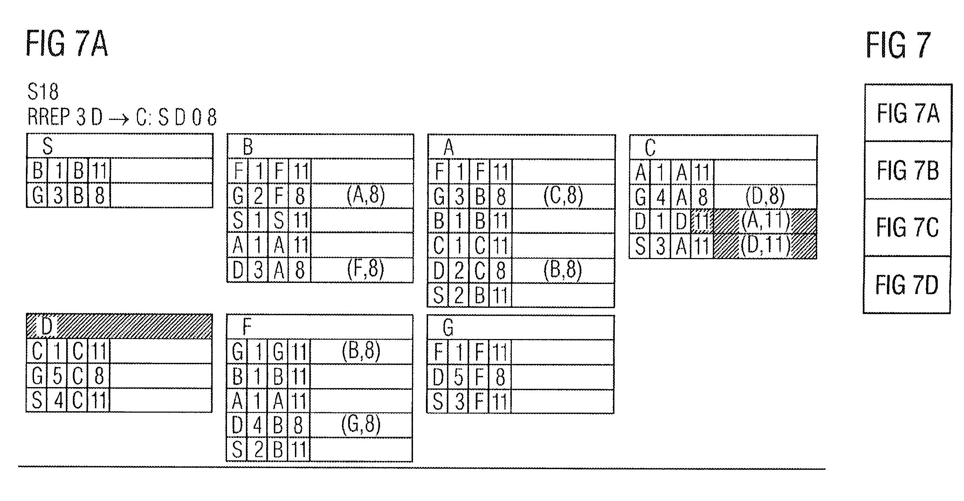

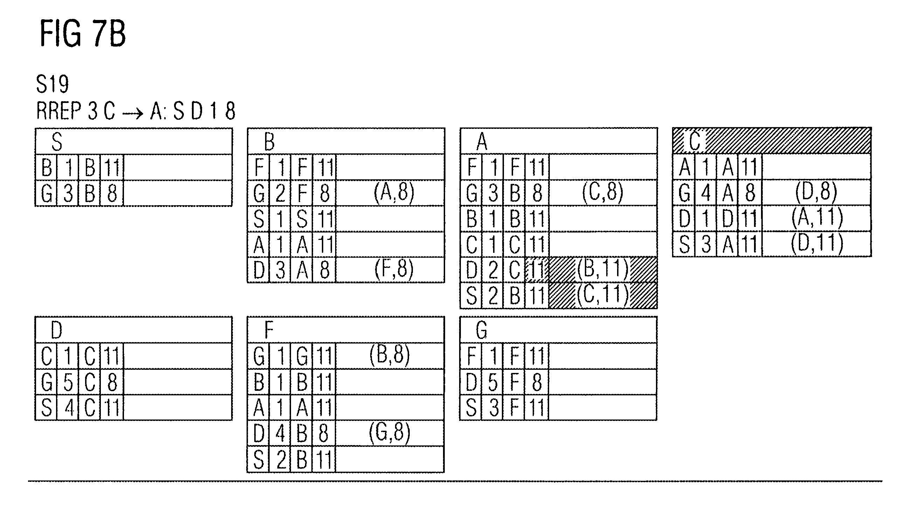

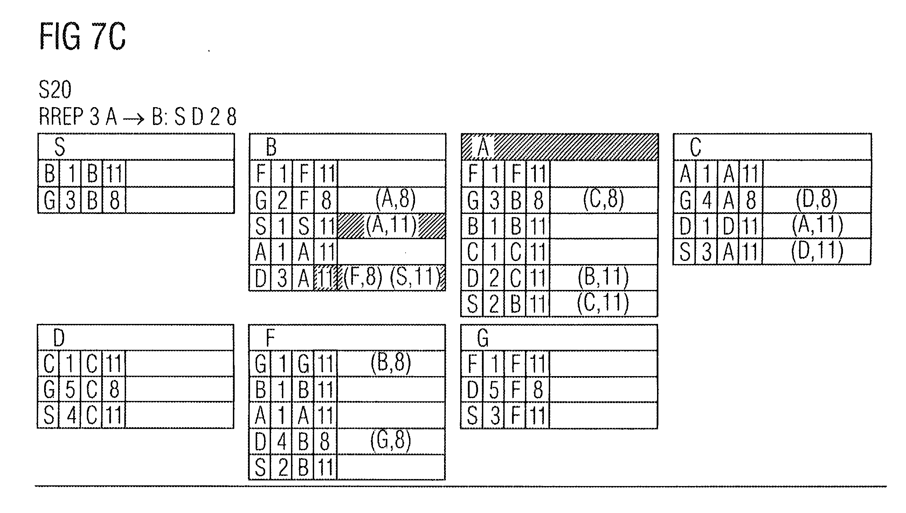

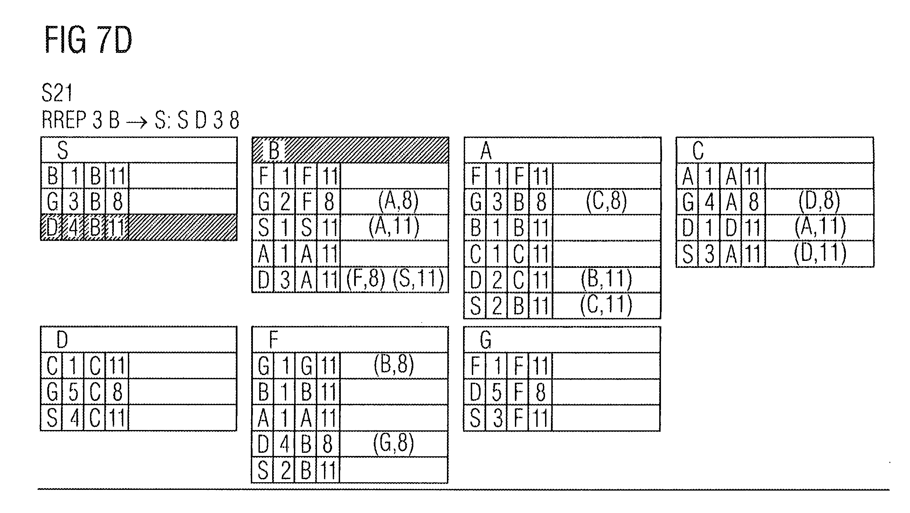

Eine den Fig. 3 und 4 entsprechende Vorgehensweise ist in Fig. 5 in Verbindung mit Fig. 6 sowie in Fig. 7 beschrieben. Dabei wurde jedoch eine Route Request-Nachricht von dem Netzknoten S als Quellknoten ausgesendet, wobei Netzknoten D als Zielknoten bestimmt ist. Wie beispielsweise aus Fig. 5, Schritt S13 hervorgeht, ist der Zeitpunkt an dem die Lebensdauer der mit dieser Route Request-Nachricht erzeugten und aktualisierten Routing-Tabelleneinträge ein anderer (Zeitpunkt 11 anstelle von Zeitpunkt 8). Bei der Betrachtung der Schritte S18 bis S21 wird ferner ersichtlich, dass manchen Routing-Tabelleneinträgen (vgl. z.B. Schritt S20, Routing-Tabelleneintrag für Netzknoten D) die Precursor-Liste ergänzt ist um einen weiteren Eintrag. Dabei zeigt Schritt S21 in Fig. 7 die endgültigen Routing-Tabellen sämtlicher Netzknoten des beispielhaften Datennetzes der Fig. 1. Falls nun, wie dies in Verbindung mit Fig. 1 beschrieben wurde, der Netzknoten A fehlerhafterweise Daten, die für den Netzknoten D bestimmt sind, an den Netzknoten F anstatt zum Netzknoten C sendet, so werden diese Datenrahmen verworfen, so dass das Auftreten von Datenschleifen verhindert ist.

Die Konsequenzen des erfindungsgemäßen Verfahrens werden nochmals anhand der folgenden Ausführung deutlich. Dabei werden folgende Abkürzungen verwendet:

| | |
|---|---|
| RA | Adresse eines empfangenden Netzknotens ("receiver address"), |
| TA | Adresse des einen Datenrahmen sendenden Netzknotens ("transmitter address"), |
| DA | Adresse des Zielknotens ("destination address"), |
| SA | Adresse, von welcher der Datenrahmen ursprünglich gesendet wurde ("source address"). |

### Betrachtung des Netzknotens A:

| | |
|---|---|
| Schritt 1: | Netzknoten A empfängt einen Datenrahmen mit RA = A, TA = B, DA = D, SA = G oder S; |
| Schritt 2: | Der Netzknoten A ist nicht das Ziel des Datenrahmens (A ≠ D), d.h. die Adresse des Zielknotens entspricht nicht der Adresse des Netzknotens, |
| Schritt 3: | Der Datenrahmen wurde korrekt empfangen, da der sendende Netzknoten B in der Precursor-Liste des Routing-Tabelleneintrags für den Zielknoten D ist ([D-2-C-11-(B,11)]). |

Es wird weiter angenommen, dass Netzknoten A den Datenrahmen an C weiterzuleiten hat (Routing-Tabelleneintrag für den Netzknoten D ist: [D-2-C-11-(B,11)]. Tatsächlich wird angenommen, dass Netzknoten A den Datenrahmen fälschlicherweise zu dem Netzknoten F überträgt.

### Betrachtung des Netzknotens F:

| | |
|---|---|
| Schritt 1: | Netzknoten F empfängt einen Datenrahmen mit: RA = F, TA = A, DA = D, SA = G oder S, |
| Schritt 2: | Der Netzknoten F ist nicht der Zielknoten des Datenrahmens (F ≠ D), |
| Schritt 3: | Der Datenrahmen wurde fälschlicherweise empfangen, da der Sender (Transmitter) B nicht in der Precursor-Liste des Routing-Tabelleneintrags für den Netzknoten D ist ([D-4-B-8-(G,8)). Dies hat zur Folge, dass der Datenrahmen verworfen wird. |

Die Erfindung unterbindet damit die Bildung von Datenschleifen, wenn ein fehlerhafter Netzknoten einen Datenrahmen zurück zu dem Netzknoten überträgt, von welchem er erhalten wird.

### Es wird davon ausgegangen, dass der Netzknoten B in Fig. 1 Datenrahmen, die für den Netzknoten D bestimmt sind, zurück zum Netzknoten S oder F sendet. Sowohl S als auch F haben gültige Pfade zu dem Zielknoten D, wobei der Netzknoten B der nächste Zielknoten, d.h. der next hop, ist.

### Betrachtung des Netzknotens B:

| | |
|---|---|
| Schritt 1: | Netzknoten B empfängt einen Datenrahmen mit RA = B, TA = S oder F, DA = D, SA = S oder G, |
| Schritt 2: | Der Netzknoten B ist nicht das Ziel des Datenrahmens (B ≠ D), |
| Schritt 3: | Der Datenrahmen wurde korrekt empfangen, da der Sender S oder F in der Precursor-Liste des Routing-Tabelleneintrages für den Netzknoten D ist: ([D-3-A-11-(F,8)(S,11)]). |

Der Netzknoten B wäre dazu eingerichtet, den Datenrahmen zum Netzknoten A zu übertragen. Dies ergibt sich aus dem Routing-Tabelleneintrag für Netzknoten: [D-3-A-11-(F,8)(5,11)]. Es wird im Ausführungsbeispiel jedoch davon ausgegangen, dass der Datenrahmen fälschlicherweise zum Netzknoten F oder S übertragen wird.

### Betrachtung des Netzknotens S:

| | |
|---|---|
| Schritt 1: | Netzknoten S empfängt einen Datenrahmen mit RA = S, TA = B, DA = D, SA = S oder G, |
| Schritt 2: | Der Netzknoten S stellt nicht das Ziel für den Datenrahmen dar (S ≠ D), |
| Schritt 3: | Der Datenrahmen wurde fälschlicherweise empfangen, da der Sender B nicht in der Precursor-Liste des Routing-Tabelleneintrages für den Netzknoten D ist: ([D-4-B-11-( )]). Dies hat zur Folge, dass der Datenrahmen verworfen wird. |

### Betrachtung des Netzknotens F:

| | |
|---|---|
| Schritt 1: | Netzknoten F empfängt einen Datenrahmen mit RA = F, TA = B, DA = D, SA = S oder G, |
| Schritt 2: | Der Netzknoten F ist nicht Ziel des Datenrahmens (F ≠ D), |
| Schritt 3: | Der Datenrahmen wurde fälschlicherweise empfangen, da der Sender B nicht in der Precursor-Liste des Routing-Tabelleneintrags für den Netzknoten D ist: ([D-4-B-8-(G,8)]). |

Der Datenrahmen wird deshalb verworfen.

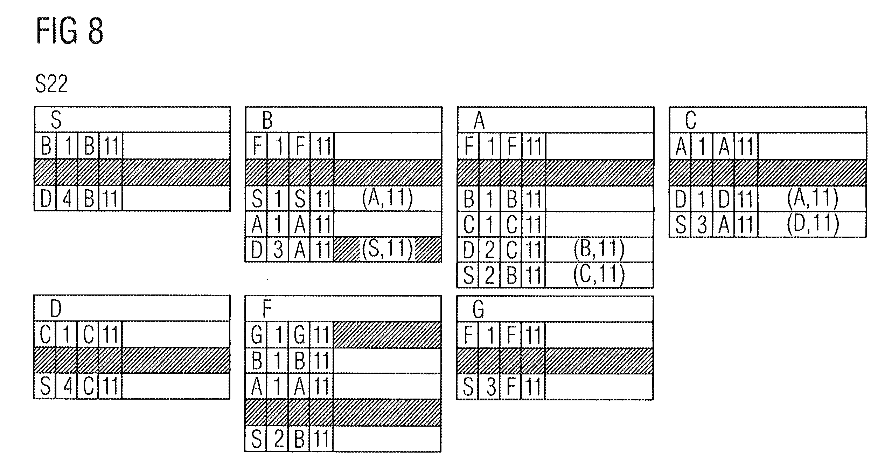

In Fig. 8 ist ferner das permanente Aktualisieren der Precursor-Listen von sich überlappenden Datenpfaden dargestellt. Es ist beispielsweise den Routing-Tabellen der Netzknoten S, B, A, C, D, F und G entnehmbar, dass aufgrund des Ablaufs der Lebensdauern von Routing-Tabelleneinträgen die zugehörigen Precurser-Listeneinträge gelöscht werden. Dies ist durch die hervorgehobenen, leeren Tabelleneinträge dargestellt. Beim Ablauf der Lebensdauer eines Routing-Tabelleneintrags wird somit sowohl der Routing-Tabelleneintrag als auch der Precursor-Listeneintrag selbst entfernt. Im Ausführungsbeispiel wurde dabei davon ausgegangen, dass der Datenpfad zwischen den Netzknoten G und D abgelaufen ist. Der Datenpfad zu dem Zielknoten D in den Netzknoten B, A und C läuft jedoch nicht ab, da hier noch ein aktiver Datenpfad zwischen den Netzknoten S und D besteht. Den Netzknoten B weist Precursor für seinen Datenpfad zu D auf, nämlich einen für den Datenpfad zwischen G und D und einen für den Datenpfad zwischen S und D. Dabei läuft lediglich der erstgenannte ab und wird von der Precursor-Liste gelöscht.

### Literaturliste:

[1] C.E. Perkins, E.M. Belding-Royer, S.R. Das: Ad hoc On-demand Distance Vector (AODV) Routing, IETF Experimental RFC 3561, July 2003.

## Patentansprüche

1. Verfahren zum Betreiben eines drahtlosen, vermaschten Datennetzes mit einer Mehrzahl an Netzknoten (MN), bei dem Datenrahmen von einem Quellknoten (SN) über einen oder mehrere Zwischenknoten (IN) zu einem Zielknoten (DN) übertragen werden, wobei der Quellknoten (SN), der eine oder die mehreren Zwischenknoten (IN) und der Zielknoten (DN) Netzknoten (MN) des Datennetzes darstellen, **dadurch gekennzeichnet, dass** bei der Übertragung eines Datenrahmens von zumindest manchen der Netzknoten (MN), die den Datenrahmen empfangen, anhand einer dem Zielknoten (DN) des Datenrahmens zugeordneten Precursor-Liste überprüft wird, ob der den Datenrahmen sendende Netzknoten (MN) in der Precursor-Liste enthalten ist, wobei im positiven Fall der Datenrahmen zu einem weiteren Netzknoten (MN) übertragen und im negativen Fall der Datenrahmen verworfen wird oder eine Fehlerbehandlungsroutine durchgeführt wird,
ein Eintrag in der Precursor-Liste eine Media Access Control (MAC)-Adresse oder eine IP-Adresse und eine Lebensdauer des Eintrags umfasst, sowie
ein Eintrag in der Precursor-Liste gelöscht wird, wenn die Lebensdauer des Eintrags abgelaufen ist.

2. Verfahren nach Anspruch 1, bei dem
- für den Quellknoten (SN), den Zielknoten (DN) und den oder die Zwischenknoten (IN) jeweils eine Wegewahl-Tabelle (RT) angelegt wird, wobei jede der Wegewahl-Tabellen (RT) zumindest einen Eintrag umfasst und
- für jeden Eintrag der Wegewahl-Tabelle (RT) die Precursor-Liste angelegt wird, welche direkte Nachbarknoten umfasst, die einen Datenrahmen zu dem betreffenden Netzknoten (MN) übertragen können.

3. Verfahren nach Anspruch 2, bei dem die Erstellung der Wegewahl-Tabelle (RT) im Rahmen der Übertragung einer von dem Quellknoten (SN) initiierten Weg-Anfragenachricht und einer von dem Zielknoten (DN) initiierten Weg-Antwortnachricht erfolgt.

4. Verfahren nach einem der vorherigen Ansprüche, bei dem die Erstellung oder Aktualisierung der Precursor-Liste im Rahmen der von dem Zielknoten (DN) initiierten Weg-Antwortnachricht vorgenommen wird.

5. Verfahren nach einem der vorherigen Ansprüche, bei dem ein Datenrahmen die Adresse des Zielknotens (D), die Adresse des sendenden Netzknotens dieses Datenrahmens, die Adresse des diesen Datenrahmen empfangenden Netzknotens und optional die Adresse des Quellknotens (S) umfasst, wobei der den Datenrahmen empfangende Netzknoten überprüft, ob die ihm zugewiesene Adresse der Adresse des Zielknotens in dem Datenrahmen entspricht und im positiven Fall der Überprüfung den Datenrahmen einer weiteren Einheit zur Verarbeitung zuführt, insbesondere einer höheren Schicht im OSI-Referenzmodell.

6. Verfahren nach einem der vorhergehenden Ansprüche, bei dem die Lebensdauer eines Eintrags in der Precursor-Liste eines Netzknotens auf einen Ausgangswert zurückgesetzt wird, wenn dieser Netzknoten einen Datenrahmen von dem Netzknoten erhält, dessen Adresse der MAC- oder IP-Adresse in dem Eintrag entspricht.

7. Verfahren nach einem der vorhergehenden Ansprüche, bei dem die Lebensdauer eines Eintrags in der Precursor-Liste maximal so lang wie ein Pfad-Lebensdauerwert von dem Quellknoten zu dem Zielknoten ist, wobei der Pfad-Lebensdauerwert als Information in dem Routing-Tabelleneintrag enthalten ist.

8. Verfahren nach Anspruch 7, bei dem eine Aktualisierung der Lebensdauer eines Eintrags in der Precursor-Liste und dem Pfad-Lebensdauerwert in dem betreffenden Routing-Tabelleneintrag gleichzeitig erfolgt.

9. Verfahren nach einem der vorherigen Ansprüche, bei dem die Erstellung einer Precursor-Liste für einen Routing-Tabelleneintrag für den Zielknoten auf einem solchen Zwischenknoten nicht notwendig ist, der
- bei einer Datenrahmenübertragungs-Route zwischen dem Zielknoten (DN) und dem Quellknoten (SN) dem Quellknoten (SN) benachbart ist, und
- bei einer Datenrahmenübertragungs-Route zwischen dem Quellknoten (SN) und dem Zielknoten (DN) dem Zielknoten (DN) benachbart ist.

10. Verfahren nach einem der vorherigen Ansprüche, bei dem ein weiterer Netzknoten, der nicht der Quellknoten (SN), der Zielknoten (DN) oder einer der Zwischenknoten (IN) in einem Datenpfad (S-B-A-C-D) zwischen dem Quellknoten (SN) und dem Zielknoten (DN) ist, nach Empfang einer Weg-Anfragenachricht des Quellknotens einen Datenrahmen an den Quellknoten über einen weiteren Zwischenknoten überträgt, welcher weitere Zwischenknoten der nächste Netzknoten auf einem Rückwärtspfad zum Quellknoten ist und welcher nicht den weiteren Netzknoten in der Precursor-Liste des Routing-Tabellenein-trages für den Quellknoten (SN) enthält und welcher den von dem weiteren Netzknoten empfangenen Datenrahmen verwirft.

11. Verfahren nach Anspruch 10, bei dem der zwischen dem weiteren Netzknoten und dem Quellknoten gebildete Datenpfad (G-B-F-S) als ungültig gekennzeichnet wird.

12. Verfahren nach Anspruch 11, bei dem durch den weiteren Netzknoten eine Route Discovery zu dem Quellknoten durchgeführt wird.

13. Verfahren nach Anspruch 10, bei dem der weitere Netzknoten in die Precursor-Liste des Routing-Tabelleneintrages für den Rückwärtspfad zum Quellknoten des weiteren Zwischenknotens aufgenommen wird, bevor der Datenrahmen von dem weiteren Netzknoten zu dem Quellknoten (SN) übertragen wird.

14. Verfahren nach Anspruch 13, bei dem die Aufnahme des weiteren Netzknotens in die Precursor-Liste des Routing-Tabelleneintrages für den Rückwärtspfad zum Quellknoten des weiteren Zwischenknotens durch das Senden einer Weg-Anwortnachricht an den Quellknoten mit dem weiteren Netzknoten als Destination und dem Quellknoten als Source geschieht.

15. Verfahren nach Anspruch 10, bei dem die Adressen aller zu einem Netzknoten benachbarten Netzknoten zusammen mit einem Ablaufwert bei Erhalt einer Weg-Anfragenachricht in die Precursor-Liste dieses Netzknotens als zeitweiliger Eintrag eingetragen werden.

16. Verfahren nach Anspruch 15, bei dem der zu dem Netzknoten benachbarte Netzknoten, der die Weg-Anfragenachricht ausgesendet hat, nicht in die Precursor-Liste dieses Netzknotens eingetragen wird.

17. Verfahren nach Anspruch 15 oder 16, bei dem der zeitweilige Eintrag in der Precursor-Liste mit einem Ablaufwert versehen wird, welcher denselben Wert aufweist wie der Rückwärtspfad, der durch die Weg-Anfragenachricht aufgebaut wurde.

18. Verfahren nach einem der Ansprüche 15 bis 17, bei dem die zeitweiligen Einträge aus der Precursor-Liste gelöscht werden, wenn ein Eintrag in die Precursor-Liste im Rahmen der von dem Zielknoten initiierten Weg-Antwortnachricht erstellt wird.

## Claims

1. Method for operating a wireless mesh data network comprising a plurality of network nodes (MN), in which data frames are transferred from a source node (SN) via one or more intermediate nodes (IN) to a destination node (DN), wherein the source node (SN), the one or more intermediate nodes (IN) and the destination node (DN) are network nodes (MN) of the data network, **characterised in that** during the transfer of a data frame at least several of the network nodes (MN) which receive the data frame check, with reference to a precursor list which is assigned to the destination node (DN) of the data frame, whether the network node (MN) sending the data frame is included in the precursor list, wherein if the result is positive the data frame is transferred to a further network node (MN) and if the result is negative the data frame is discarded or an error recovery routine is performed,
an entry in the precursor list comprising a Media Access Control (MAC) address or an IP address and a lifetime of the entry, and
an entry in the precursor list being deleted when the lifetime of the entry has expired.

2. Method according to claim 1, in which
- a routing table (RT) is set up in each case for the source node (QN), the destination node (DN) and the intermediate node or nodes (IN), wherein each of the routing tables (RT) comprises at least one entry, and
- the precursor list is set up for each entry in the routing table (RT) and comprises immediately adjacent nodes which can transfer a data frame to the relevant network node (MN).

3. Method according to claim 2, in which the creation of the routing table (RT) takes place in the context of the transfer of a route request that is initiated by the source node (SN) and a route reply that is initiated by the destination node (DN) .

4. Method according to one of the preceding claims, in which the creation or updating of the precursor list is performed in the context of the route reply that is initiated by the destination node (DN).

5. Method according to one of the preceding claims, in which a data frame comprises the address of the destination node (D), the address of the sending network node of this data frame, the address of the network node receiving this data frame and optionally the address of the source node (S), wherein the network node receiving the data frame checks whether the address that has been allocated to it corresponds to the address of the destination node in the data frame and, if the result of the check is positive, supplies the data frame to a further unit for processing, in particular to a higher layer in the OSI reference model.

6. Method according to one of the preceding claims, in which the lifetime of an entry in the precursor list of a network node is reset to an initial value when this network node receives a data frame from the network node whose address corresponds to the MAC or IP address in the entry.

7. Method according to one of the preceding claims, in which the lifetime of an entry in the precursor list is maximally as long as a path lifetime value from the source node to the destination node, wherein the path lifetime value is included as information in the routing table entry.

8. Method according to claim 7, in which the lifetime of an entry in the precursor list and the path lifetime value in the relevant routing table entry are updated simultaneously.

9. Method according to one of the preceding claims, in which the creation of a precursor list for a routing table entry for the destination node is not necessary on any such intermediate node which
- is adjacent to the source node (SN) in the case of a data frame transfer route between the destination node (DN) and the source node (SN), or
- is adjacent to the destination node (DN) in the case of a data frame transfer route between the source node (SN) and the destination node (DN).

10. Method according to one of the preceding claims, in which a further network node, which is not the source node (SN) or the destination node (DN) or one of the intermediate nodes (IN) on a data path (S-B-A-C-D) between the source node (SN) and the destination node (DN), after receiving a route request of the source node, transfers a data frame to the source node via a further intermediate node, which further intermediate node is the next network node on a reverse path to the source node and which does not contain the further network node in the precursor list of the routing table entry for the source node (SN) and which discards the data frame received from the further network node.

11. Method according to claim 10, in which the data path (G-B-F-S) which is formed between the further network node and the source node is identified as invalid.

12. Method according to claim 11, in which a route discovery to the source node is performed by the further network node.

13. Method according to claim 10, in which the further network node is included in the precursor list of the routing table entry for the reverse path to the source node, at the further intermediate node, before the data frame is transferred from the further network node to the source node (SN).

14. Method according to claim 13, in which the inclusion of the further network node in the precursor list of the routing table entry for the reverse path to the source node, at the further intermediate node, is effected by means of sending a route reply to the source node, specifying the further network node as the destination and the source node as the source.

15. Method according to claim 10, in which the addresses of all network nodes adjacent to a network node are entered with an expiry value in the precursor list of this network node as a temporary entry when a route request is received.

16. Method according to claim 15, in which the network node which is adjacent to the network node and which broadcast the route request is not entered in the precursor list of this network node.

17. Method according to claim 15 or 16, in which the temporary entry in the precursor list is given an expiry value which has the same value as the reverse path that was established by the route request.

18. Method according to one of claims 15 to 17, in which the temporary entries are deleted from the precursor list when an entry is created in the precursor list in the context of the route reply that is initiated by the destination node.

## Revendications

1. Procédé d'exploitation d'un réseau de données maillé sans fil comportant une pluralité de noeuds de réseau (MN), dans lequel des trames de données sont transmises d'un noeud source (SN) vers un noeud de destination (DN) via un ou plusieurs noeuds intermédiaires (IN), le noeud source (SN), l'un ou les plusieurs noeuds intermédiaires (IN) et le noeud de destination (DN) étant des noeuds de réseau (MN) du réseau de données, caractérisé en ce qui :
- il est vérifié, à la transmission d'une trame de données par au moins certains des noeuds de réseau (MN) qui reçoivent la trame de données, à l'aide d'une liste de précurseurs associée au noeud de destination (DN) de la trame de données, si le noeud de réseau (MN) qui émet la trame de données est contenu dans la liste de précurseurs, la trame de données, dans le cas positif, étant transmise à un autre noeud de réseau (MN) et, dans le cas négatif, la trame de données étant rejetée ou une routine de traitement d'erreurs étant exécutée ;
- une entrée de la liste de précurseurs comprenant une adresse Media Access Control (MAC) ou une adresse IP et une durée de vie de l'entrée ; et
- une entrée de la liste de précurseurs étant effacée lorsque la durée de vie de l'entrée a expiré.

2. Procédé selon la revendication 1, dans lequel :
- est créée, pour le noeud source (SN), le noeud de destination (DN) et le ou les noeuds intermédiaires (IN), respectivement une table de routage, chacune des tables de routage (RT) comprenant au moins une entrée ; et
- est créée, pour chaque entrée de la table de routage (RT), la liste de précurseurs qui comprend des noeuds voisins directs qui peuvent transmettre une trame de données au noeud de réseau concerné (MN).

3. Procédé selon la revendication 2, dans lequel la création de la table de routage (RT) s'effectue dans le cadre de la transmission d'un message de demande de routage initialisé par le noeud source (SN) et d'un message de réponse de routage initialisé par le noeud de destination (DN).

4. Procédé selon l'une des revendications précédentes, dans lequel la création ou l'actualisation de la liste de précurseurs sont effectuées dans le cadre du message de réponse de routage initialisé par le noeud de destination (DN).

5. Procédé selon l'une des revendications précédentes, dans lequel une trame de données inclut l'adresse du noeud de destination (D), l'adresse du noeud de réseau qui émet cette trame de données, l'adresse du noeud de réseau qui reçoit cette trame de données et, optionnellement, l'adresse du noeud source (S), le noeud de réseau qui reçoit la trame de données vérifiant si l'adresse qui lui a été attribuée correspond à l'adresse du noeud de destination dans la trame de données et, si la vérification est positive, envoie la trame de données sur une autre unité en vue de son traitement, et plus particulièrement sur une couche supérieure du modèle de référence OSI.

6. Procédé selon l'une des revendications précédentes, dans lequel la durée de vie d'une entrée de la liste de précurseurs d'un noeud de réseau est remise à une valeur initiale si ce noeud de réseau reçoit une trame de données du noeud de réseau dont l'adresse correspond à l'adresse MAC ou IP contenue dans l'entrée.

7. Procédé selon l'une des revendications précédentes, dans lequel la durée de vie d'une entrée de la liste de précurseurs est au maximum aussi longue qu'une valeur de durée de vie d'un chemin du noeud source au noeud de destination, la valeur de la durée de vie du chemin étant contenue en tant qu'information dans l'entrée de la table de routage.

8. Procédé selon la revendication 1, dans lequel une actualisation de la durée de vie d'une entrée dans la liste de précurseurs et de la valeur de la durée de vie du chemin s'effectue simultanément dans l'entrée correspondante de la table de routage.

9. Procédé selon l'une des revendications précédentes, dans lequel la création d'une liste de précurseurs pour une entrée de table de routage pour le noeud de destination n'est pas nécessaire sur un noeud intermédiaire qui :
- est voisin du noeud source (SN) dans le cas d'un chemin de transmission de trames de données entre le noeud de destination (DN) et le noeud source (SN) ; et
- est voisin du noeud de destination (DN) dans le cas d'un chemin de transmission de trames de données entre le noeud source (SN) et le noeud de destination (DN).

10. Procédé selon l'une des revendications précédentes, dans lequel un autre noeud de réseau, qui n'est ni le noeud source (SN), ni le noeud de destination (DN), ni l'un des noeuds intermédiaires (IN) dans un chemin de données (S-B-A-C-D) entre le noeud source (SN) et le noeud de destination (DN), transmet, après la réception d'un message de demande de routage du noeud source, une trame de données au noeud source via un autre noeud intermédiaire qui est le noeud de réseau le plus proche sur un chemin de retour vers le noeud source et qui ne contient pas l'autre noeud de réseau dans la liste de précurseurs de l'entrée de la table de routage pour le noeud source (SN) et qui rejette la trame de données reçue de l'autre noeud de réseau.

11. Procédé selon la revendication 10, dans lequel le chemin de données (G-B-F-S) constitué entre l'autre noeud de réseau et le noeud source est marqué comme non valide.

12. Procédé selon la revendication 11, dans lequel l'autre noeud de réseau effectue une découverte de chemin vers le noeud source.

13. Procédé selon la revendication 10, dans lequel l'autre noeud de réseau est admis sur la liste de précurseurs de l'entrée de la table de routage pour le chemin de retour vers le noeud source de l'autre noeud intermédiaire avant la transmission de la trame de données de l'autre noeud de réseau vers le noeud source (SN).

14. Procédé selon la revendication 13, dans lequel l'admission de l'autre noeud de réseau sur la liste de précurseurs de l'entrée de la table de routage pour le chemin de retour vers le noeud source de l'autre noeud intermédiaire s'effectue par envoi d'un message de réponse de routage au noeud source avec l'autre noeud de réseau comme destination et le noeud source comme source.

15. Procédé selon la revendication 10, dans lequel les adresses de tous les noeuds de réseau voisins d'un noeud de réseau, à la réception d'un message de demande de routage, sont inscrites, conjointement avec une valeur d'expiration, en tant qu'entrée temporaire dans la liste de précurseurs de ce noeud de réseau.

16. Procédé selon la revendication 15, dans lequel le noeud de réseau qui est voisin du noeud de réseau et qui a émis le message de demande de routage n'est pas inscrit sur la liste de précurseurs de ce noeud de réseau.

17. Procédé selon la revendication 15 ou 16, dans lequel l'entrée temporaire dans la liste de précurseurs est pourvue d'une valeur d'expiration qui est identique à celle du chemin de retour qui a été établi par le message de demande de routage.

18. Procédé selon l'une des revendications 15 à 17, dans lequel les entrées temporaires sont effacées de la liste de précurseurs lorsqu'une entrée dans la liste de précurseurs est créée dans le cadre du message de réponse de routage initialisé par le noeud de destination.
